(19)

Europäisches
Patentamt

European
Patent Office

Office européen
des brevets

(11)     **EP 3 919 238 B1**

(12)                        **EUROPEAN PATENT SPECIFICATION**

(45) Date of publication and mention
of the grant of the patent:
**24.04.2024  Bulletin 2024/17**

(21) Application number: **20748373.6**

(22) Date of filing: **31.01.2020**

(51) International Patent Classification (IPC):
*G05D 1/00* (2024.01)     *G05B 15/02* (2006.01)
*B25J 19/02* (2006.01)     *B25J 19/06* (2006.01)
*B25J 9/16* (2006.01)      *B25J 11/00* (2006.01)
*G05D 1/02* (2020.01)      *G08B 13/196* (2006.01)
*G08B 13/24* (2006.01)

(52) Cooperative Patent Classification (CPC):
**G05B 15/02; G05D 1/0044; G05D 1/028;**
**G08B 13/19647; G08B 13/2491;**
G05B 2219/31003; G05B 2219/31007;
G05B 2219/45098; Y02P 90/02

(86) International application number:
**PCT/KR2020/001479**

(87) International publication number:
**WO 2020/159278 (06.08.2020 Gazette 2020/32)**

(54) **MOBILE ROBOT AND CONTROL METHOD THEREFOR**

MOBILER ROBOTER UND STEUERUNGSVERFAHREN DAFÜR

ROBOT MOBILE ET SON PROCÉDÉ DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **31.01.2019  KR 20190012986**

(43) Date of publication of application:
**08.12.2021  Bulletin 2021/49**

(73) Proprietor: **LG Electronics Inc.**
**SEOUL 07336 (KR)**

(72) Inventors:
• **KO, Kyoungsuk**
  **Seoul 06772 (KR)**
• **CHOI, Koh**
  **Seoul 06772 (KR)**
• **LEE, Hyungsub**
  **Seoul 06772 (KR)**
• **LEE, Sungwook**
  **Seoul 06772 (KR)**

(74) Representative: **Ter Meer Steinmeister & Partner**
**Patentanwälte mbB**
**Nymphenburger Straße 4**
**80335 München (DE)**

(56) References cited:
**EP-B1- 2 945 037      JP-A- 2017 531 423**
**KR-B1- 101 334 961    US-A1- 2004 027 270**
**US-A1- 2017 026 818   US-A1- 2017 031 360**
**US-A1- 2018 364 350**

**Description**

**BACKGROUND**

1. **Technical Field**

The present disclosure relates to a mobile robot that autonomously drives in a designated area and a control method thereof.

2. **Description of the Related Art**

In general, a mobile robot is a device that automatically performs a predetermined operation while driving by itself in a predetermined area without a user's manipulation. The mobile robot senses an obstacle located in the area to perform an operation by moving closer to or away from the obstacle.

Such a mobile robot may include a lawn mower robot that mows the lawn on the ground surface of the area as well as a cleaning robot that performs cleaning while driving in the area. US 2017/026818 A1 relates to a method performed by a mobile lawn mowing robot, the method comprising: pairing a beacon with the mobile lawn mowing robot, wherein pairing the beacon with the mobile lawn mowing robot comprises: determining a distance between the beacon and the mobile lawn mowing robot; confirming that the beacon is within a pairing distance from the mobile lawn mowing robot based on a comparison of the determined distance to a pairing distance; and subsequent to confirming that the beacon is within the pairing distance from the mobile lawn mowing robot, pairing the beacon with the mobile lawn mowing robot; and following pairing: detecting wideband or ultra-wideband signals from the beacon; and using the wideband or ultra-wideband signals to enable navigation over an area. US 2018/364350 A1 relates to electronic boundary systems, and more specifically, to a linear virtual boundary system that radiates electromagnetic waves towards a certain area that needs to be bounded and detects intrusions using a reflector.

In general, a lawn mower may include a riding type device that mows the lawn or weeds the grass on the ground while moving according to a user's operation when the user rides on the device, and a walk-behind type or hand type device that mows the lawn while moving when user manually pulls or pushes the device. Such a lawn mower is moved by the user's direct manipulation to mow the lawn, so there is an inconvenience in that the user must directly operate the device.

Accordingly, a mobile robot-type lawn mower having a means capable of mowing the lawn in a mobile robot is being studied. However, in the case of a lawn mower robot, there is a need to set the area to be moved in advance since it operates outdoors as well as indoors. Specifically, since the outdoors is an open space, unlike the indoors, the designation of the area must be made in advance, and the area must be limited to drive the place where the grass is planted.

For this purpose, in Korean Patent Application Publication No. 2015-0125508, in order to set an area in which the lawn mower robot will move, a wire is buried in a place where grass is planted, and the mobile robot is controlled to move in an inner area of the wire. Then, a boundary for the mobile robot is set based on a voltage value induced by the wire.

However, this method has a problem that the wire must be buried in the ground every time. In addition, in order to change the boundary once set, the buried wire must be removed and then the wire must be buried again, there is a difficulty due to increased time and labor in setting the boundary.

In order to solve this problem, a method of restricting the driving of a mobile robot that sets a virtual wall by transmitting a signal in a beacon method has been studied. However, in the case of such a virtual wall, setting the virtual wall is only allowed with a straight distance, and is not suitable for an outdoor area having various types of terrain. Furthermore, since a number of auxiliary devices for setting the virtual wall must be installed, the cost increases, and there is a limitation in that the virtual wall cannot be set over all areas.

In addition, a method of restricting the movement of a mobile robot based on a GPS-based positioning method is known to have an average error of about 2 to 5 m, so it does not satisfy the minimum positioning error range required for autonomous driving, which is less than about 30 cm. Moreover, even when sensors such as DGPS, camera, LiDAR, and radar are used to reduce an average error of GPS, blind spots and high costs are generated, and there exists a difficulty in commercializing the mobile robot in general.

Meanwhile, in order to solve the disadvantages of the GPS-based positioning method, a beacon-based positioning method may be used.

In this regard, US Pub. No. US 2017/0026818 discloses pairing a mobile lawn mower robot with a beacon, then determining a distance between the beacon and the mobile lawn mower robot, and comparing the determined distance with a pairing distance to check whether the beacon is within the pairing distance, and then using it for navigation. However, in order to use a beacon, there are disadvantages and security issues that require pairing by performing a related app installation.

Accordingly, in recent years, a method of restricting the driving of a mobile robot using UWB (Ultra-Wideband) communication technology known to have an accuracy of less than about 30 cm has been studied. UWB (Ultra-Wideband) is suitable for real-time position tracking because it is hardly affected by multipath problems due to precise area estimation and the properties of penetrating a material.

On the other hand, since the outdoors is an open space, unlike indoors, intrusion by a third party may be made more easily and frequently. For security, monitoring the intrusion of a third party by installing a monitoring sensor in a large open space requires a lot of cost and effort, and is difficult to commercialize in reality. Besides, even when a pet or child comes out of the house and moves freely without intrusion by a third party, the mobile robot needs to be aware of this for safety.

SUMMARY

Accordingly, an aspect of the present disclosure is to provide a robot capable of performing a sensing function for security and safety even in an open space using UWB (Ultra-Wideband) communication for calculating the position of a mobile robot without adding a separate sensor such as a camera, and a control method thereof.

Furthermore, another aspect of the present disclosure is to provide a mobile robot capable of obtaining the position and movement path of a moving object within a boundary using UWB (Ultra-Wideband) communication when the entry of the moving object such as an intruder within the boundary is sensed, and a control method thereof.

In addition, still another aspect of the present disclosure is to provide a mobile robot capable of variably controlling the driving of the mobile robot based on the position and movement path of a moving object for safety, and notifying the outside of the entry of the moving object into the boundary and the movement path thereof for security, and a control method thereof.

For this purpose, the subject matter of the independent claims is provided, which solve the above-mentioned technical problems. A mobile robot according to the present disclosure may include a drive unit that moves a main body; a plurality of communication units installed within an area to communicate with position information transmitters that transmit signals; and a controller that calculates location determination-related data based on at least one of a first signal transmitted between the position information transmitters and a second signal transmitted between the main body and the position information transmitters within the area, wherein the controller senses the entry of a moving object into the area to perform an operation corresponding to the sensing by responding that an amount of change in the calculated location determination-related data is out of a reference range.

The location determination-related data includes at least one of distance information, signal strength information, and signal direction and angle information calculated based on the first signal and a response signal to the first signal and/or based on the second signal and a response signal to the second signal.

In one embodiment, the controller may determine that a moving object enters into the area by responding that a change in location determination-related data calculated from the first signal is out of a reference range, and an attribute of the first signal is changed from either one of a non-line of sight (NLOS) signal and a line of sight (LOS) signal to the other one.

In one embodiment, the controller may sense that a moving object enters into the area by responding that an attribute of the first signal is changed from either one of a non-line of sight (NLOS) signal and a line of sight (LOS) signal to the other one, and whether the attribute of the first signal is a non-line of sight (NLOS) signal or a line of sight (LOS) signal may be determined by acquiring a channel impulse response to the first signal.

In one embodiment, the controller may sense the entry of a moving object into the area based on whether a change in location determination-related data calculated from the first signal is out of a reference range, and sense the movement of the moving object by responding that a change in location determination-related data calculated from the second signal after sensing the entry is out of a reference range.

In one embodiment, the controller may recognize the entry position of the moving object based on position information of a position information transmitter that transmits a signal in which a change in the location determination-related data is out of a reference range.

In one embodiment, the controller may recognize a current position of the main body based on a signal from the position information transmitter, and detect the position of the moving object based on distance information between the current position of the main body and the position information transmitter that transmits a signal in which a change of the calculated location determination-related data is out of a reference range when the entry of the moving object is sensed.

The controller is configured to control the drive unit to rotate or move the main body toward the sensed position of the moving object with an operation corresponding to the sensing.

In one embodiment, the controller may transmit the sensed position information of the moving object and path information corresponding to a change of the position information with an operation corresponding to the sensing.

The controller is configured to output a preset warning alarm through an output unit with an operation corresponding to the sensing.

In one embodiment, in case where a UWB antenna is mounted on the moving object, the controller may communicate with the UWB antenna and the position information transmitter to recognize the position of the moving object, and control the drive unit to move the main body based on the position of the moving object.

In one embodiment, in case where a UWB antenna is mounted on the moving object, the controller may adjust a driving speed of the main body or change a preset driving path when sensing that the moving object approaches the main body based on a signal transmitted from the UWB antenna.

In one embodiment, the controller may set a virtual boundary for the area based on position information calculated based on a signal of the position information transmitter, and control the drive unit to move the main body so as not to deviate from the set boundary.

In addition, a method of controlling a mobile robot according to an embodiment may include communicating with a plurality of position information transmitters installed in an area to transmit signals; calculating location determination-related data based on at least one of a first signal transmitted between the position information transmitters and a second signal transmitted between the mobile robot and the position information transmitters within the area; sensing the entry of a moving object into the area by responding that a change in the calculated location determination-related data is out of a reference range; and performing an operation corresponding to the sensing of the entry.

Furthermore, in one embodiment, said sensing the entry of a moving object into the area may include sensing the entry of the moving object in the area based on whether a change in the location determination-related data calculated from the first signal is out of a reference range; and sensing the movement of the moving object by responding that a change in the location determination-related data calculated from the second signal after sensing the entry is out of a reference range.

Furthermore, in one embodiment, said performing an operation corresponding to the sensing may include determining an entry position of the moving object based on position information between position information transmitters that have transmitted signals in which the calculated location determination-related data is out of a reference range; monitoring a change in location determination-related data calculated from the first signal and the second signal to detect a current position of the moving object; driving a main body by avoiding the detected current position of the moving object; and transmitting the detected position information of the moving object and path information corresponding to a change of the position information to an external terminal.

As described above, a mobile robot and a control method thereof according to an embodiment of the present disclosure may provide a home guard function that senses a moving object even in an open outdoor area with only UWB anchors and UWB tags required to calculate the position of a mobile robot without additional equipment.

In addition, the position and movement path of a moving object existing within a boundary may be obtained using UWB communication, and the mobile robot may be driven by avoiding the position of the moving object or the position and movement path of an intruder may be notified to the outside according to an attribute of the moving object, thereby satisfying both safety and security at the same time without additional equipment even in an open outdoor area.

## BRIEF DESCRIPTION OF THE DRAWINGS

FIG. 1 is a perspective view showing an example of a mobile robot according to the present disclosure.
FIG. 2A is a conceptual view for explaining a state in which a mobile robot according to the present disclosure communicates with a terminal and a server.
FIG. 2B is a block diagram showing an exemplary configuration of a mobile robot according to the present disclosure, and FIG. 2C is a block diagram showing an exemplary configuration of a terminal communicating with a mobile robot according to the present disclosure.
FIG. 3 is a conceptual view for explaining a signal flow between devices for setting a boundary for a mobile robot according to an embodiment of the present disclosure.
FIG. 4 is a conceptual view related to a method of setting a virtual boundary for a mobile robot according to an embodiment of the present disclosure.
FIGS. 5A, 5B, and 5C are conceptual views for explaining a specific example of a method of sensing the entry of a moving object into a virtual boundary according to an embodiment of the present disclosure.
FIG. 6 is a representative flowchart of a method of controlling a mobile robot according to an embodiment of the present disclosure.
FIGS. 7 and 8 are conceptual views for explaining different embodiments of a method in which a mobile robot according to an exemplary embodiment of the present disclosure detects a position of a moving object that has entered into a boundary.
FIG. 9 is a conceptual view showing an example of a method in which a mobile robot according to an embodiment of the present disclosure performs a monitoring operation on a moving object.
FIGS. 10 and 11 are a flowchart showing a method in which a mobile robot according to an embodiment of the present disclosure performs driving of a main body and notification of the position of a moving object based on the position of the moving object, and an exemplary view showing notification of the entry of a moving object through a terminal.

## DETAILED DESCRIPTION OF THE EMBODIMENTS

Hereinafter, a mobile robot according to the present disclosure will be described in detail with reference to the accompanying drawings.

Hereinafter, an embodiment disclosed herein will be described in detail with reference to the accompanying drawings, and it should be noted that technological terms used herein are merely used to describe a specific embodiment, but not limitative to the concept of the present disclosure.

First, it should be noted in advance that the term "mobile robot" disclosed in the present disclosure may be used with the same meaning as a "robot" capable of autonomous driving, a "lawn mower mobile robot", a "lawn mower robot", a "lawn mower device", or a "mobile robot for lawn mowing", and they may be used interchangeably.

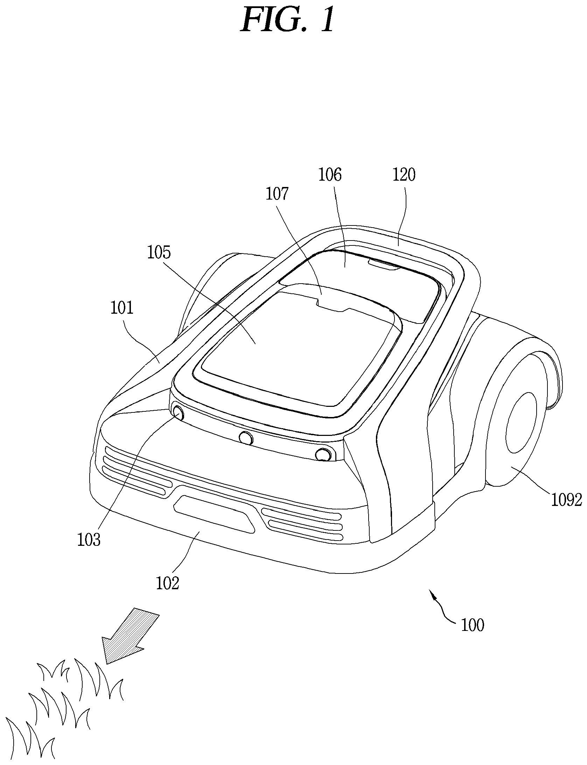

FIG. 1 is an example of a mobile robot for lawn mowing according to the present disclosure.

A mobile robot according to the present disclosure may include an outer cover 101, an inner body (not shown), and a wheel 1092.

The outer cover 101 may define an appearance of a mobile robot. The appearance of the mobile robot may be defined in a shape similar to an automobile, for example. The outer cover 101 may be disposed to surround an outside of the inner body (not shown).

The outer cover 100 may be mounted on an upper portion of the inner body to cover the upper portion of the inner body. A receiving portion is disposed inside the outer cover 101, and the inner body may be accommodated in the receiving portion.

A bumper portion 102 may be disposed at a front portion of the outer cover 101 in preparation for a collision with an obstacle. The bumper portion 102 may be formed of a rubber material capable of alleviating an impact.

A plurality of ultrasonic sensor modules 103 may be mounted on a front upper portion of the outer cover 101. The plurality of ultrasonic sensor modules 103 are configured to emit ultrasonic waves toward the front during the driving of the robot and receive reflected waves reflected from the obstacle to sense an obstacle in front.

The plurality of ultrasonic sensor modules 103 may be spaced apart in a vehicle width direction. The plurality of ultrasonic sensor modules 103 may be spaced apart from the bumper portion 102 at a predetermined distance to the rear. In addition, the plurality of ultrasonic sensor modules 103 may be replaced with signal-based sensors, for example, UWB sensors, other than the ultrasonic sensors.

The mobile robot may include a controller to stop the operation of the mobile robot when an obstacle is sensed by receiving a sensing signal from the ultrasonic sensor modules 103.

A first upper cover 105 and a second upper cover 106 may be provided in the outer cover 101. Furthermore, a stop switch 107 may be provided between the first upper cover 105 and the second upper cover 106. The stop switch 107 is mounted to be pushable on the outer cover 101, and in case of an emergency, it is turned on to stop the operation of the mobile robot when the user pushes the stop switch 107 once, and resume the operation of the mobile robot when pushed once again.

Each of the plurality of wheels 1092 may be connected to a drive motor located in the inner body, and rotatably mounted on both sides of the inner body 160 in a width direction thereof. Each of the plurality of wheels 1092 may be connected to a drive motor by a driving shaft, and rotated by receiving power from the drive motor.

The plurality of wheels 1092 provide power for driving the robot, and the number of rotations of each of the plurality of wheels 1092 may be independently controlled by the controller.

Furthermore, a handle 120 (which may also be referred to as a "carrying handle") may be provided on the outer cover 101 so that the user can hold the mobile robot by hand when transporting the mobile robot.

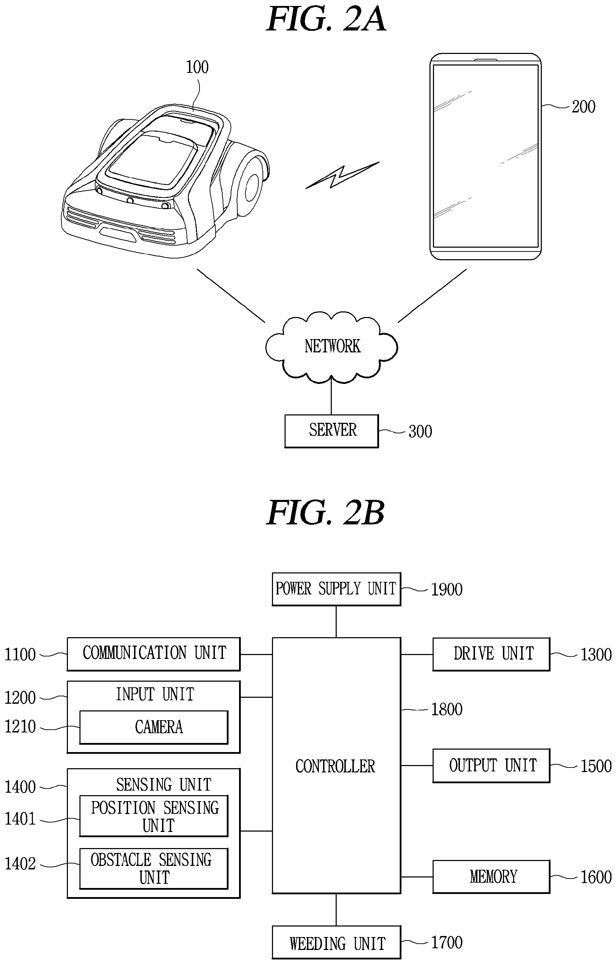

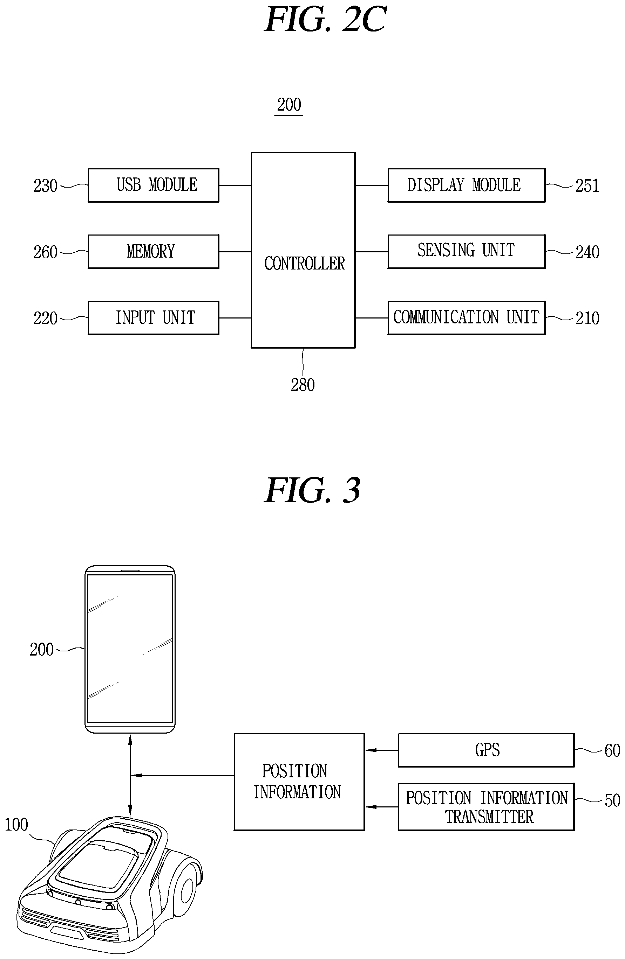

FIG. 2 is a view showing a state in which a mobile robot according to the present disclosure communicates with a terminal and a server. The mobile robot 100 according to the present disclosure may exchange data with the terminal 200 through network communication. In addition, the mobile robot 100 may perform a weeding-related operation or a corresponding operation according to a control command received from the terminal 200 through network communication or other communication.

Here, the network communication may denote at least one of wireless communication technologies such as WLAN (Wireless LAN), WPAN (Wireless Personal Area Network), Wi-Fi (Wireless-Fidelity), Wi-Fi (Wireless Fidelity) Direct, DLNA (Digital Living Network Alliance), WiBro (Wireless Broadband), WiMAX (World Interoperability for Microwave Access), Zigbee, Z-wave, Blue-Tooth, RFID (Radio Frequency Identification), Infrared Data Association (IrDA), Ultra-wide Band, and Wireless Universal Serial Bus (USB).

The illustrated network communication may vary depending on what is the communication method of the mobile robot.

In FIG. 2A, the mobile robot 100 may provide information sensed through each sensing unit to the terminal 200 through network communication. In addition, the terminal 200 may transmit a control command generated based on the received information to the mobile robot 100 through network communication.

Meanwhile, the terminal 200 may be referred to as a controller, a remote control, a remote controller, or a terminal that is manipulated by a user to control an operation related to the driving of the mobile robot 100. To this end, an application for controlling an operation related to the driving of the mobile robot 100 may be installed in the terminal 200, and the relevant application may be executed through user manipulation.

Furthermore, in FIG. 2A, the communication unit of the mobile robot 100 and the communication unit of the terminal 200 communicate directly in a wireless manner or communicate indirectly through another router (not shown), thereby obtaining information related to the driving operation of the mobile robot and position information with respect to each other

In addition, the mobile robot 100, the server 300, and the terminal 200 may be connected to each other through a network to exchange data with each other.

For example, the server 300 may exchange data with the mobile robot 100 and/or the terminal 200 to register information related to a boundary set for the mobile robot 100, map information based on the set boundary, obstacle information on the map. Furthermore, the server 300 may provide the registered information to the mobile robot 100 and/or the terminal 200 according to a request.

The server 300 may be connected directly in a wireless manner through the terminal 200. Alternatively, the server 300 may be connected to the mobile robot 100 without going through the terminal 200.

The server 300 may include a processor capable of processing a program, and may include various algorithms. For an example, the server 300 may have an algorithm related to the execution of machine learning and/or data mining. For another example, the server 300 may include a voice recognition algorithm. In this case, upon receiving voice data, the received voice data may be converted into text format data and then output.

The server 300 may store firmware information, operation information (course information, etc.) on the mobile robot 100, and register product information for the mobile robot 100. For example, the server 300 may be a server operated by a cleaner manufacturer or a server operated by an open application store operator.

Hereinafter, FIG. 2B is a block diagram showing an exemplary configuration of the mobile robot 100 according to the present disclosure, and FIG. 2C is a block diagram showing an exemplary configuration of the terminal 200 communicating with the mobile robot 100.

First, the configuration of the mobile robot 100 will be described in detail with reference to FIG. 2B.

As illustrated in FIG. 2B, the mobile robot 100 may be configured to include a communication unit 1100, an input unit 1200, a drive unit 1300, a sensing unit 1400 including a position sensing unit 1401, and an obstacle sensing unit 1402, an output unit 1500, amemory 1600, a weeding unit 1700, a controller 1800, and a power supply unit 1900.

The communication unit 1100 may communicate with the terminal 200 through a wireless communication manner. Furthermore, the communication unit 1100 may communicate with a terminal connected to a predetermined network to control an external server or a mobile robot.

The communication unit 1100 may transmit the generated map-related data to the terminal 200. The communication unit 1100 may receive a command from the terminal 200 and may transmit data related to the operation state of the mobile robot 100 to the terminal 200.

The communication unit 1100 includes a communication module such as Wi-Fi and WiBro as well as short-range wireless communication such as ZigBee and Bluetooth to transmit and receive data. In addition, the communication unit 1100 may include a UWB module that transmits an ultra-wideband signal.

The input unit 1200 may include an input element such as at least one button, switch, and touch pad. Furthermore, the output unit 1500 may include an output unit such as a display module and a speaker. When the output unit 1500 is used as an input unit and an output unit at the same time, a user command may be input through a display module or a speaker to output the operation state of the mobile robot.

In addition, the input unit 1200 is provided to receive image information (or signal), audio information (or signal), data, or information input from a user, and may be provided with one or more cameras 1210 to receive image information.

The camera 1210 processes image frames such as still or moving images obtained by an image sensor in a photographing mode. Furthermore, the camera 221 includes at least one of a camera sensor (e.g., CCD, CMOS, etc.), a photo sensor (or image sensor), and a laser sensor.

The camera 1210 may be provided at one side, for example, above or in front of the mobile robot 100. In addition, the camera 1210 may be switched to an active/inactive state according to a drive signal transmitted from the controller 1800. In addition, the image acquired through the camera 1210 may be transmitted by the controller 1800 to an external terminal/server communicating with the mobile robot 100.

The memory 1600 may store an input sensing signal, store reference data for determining an obstacle, and store obstacle information about the sensed obstacle. Furthermore, the memory 1600 stores control data for controlling the operation of the mobile robot and data according to the cleaning mode of the mobile robot.

The collected position information is stored in the memory 1600, and information on a driving area and its boundary is stored. For example, the memory 1600 stores data that can be read by a microprocessor, and may be any one of a hard disk drive (HDD), a solid state disk (SSD), a silicon disk drive (SDD), a ROM, a RAM, a CD-ROM, a magnetic tape, a floppy disk, or an optical data storage device.

The drive unit 1300 may include at least one drive motor to allow the mobile robot to move according to a control command from the controller 1800. The drive unit 1300 may include a left wheel drive motor that rotates a left wheel and a right wheel drive motor that rotates a right wheel. In addition, the drive unit 1300 may further include one or more auxiliary wheels for stable support.

For example, when the mobile robot main body is driving, the left wheel drive motor and the right wheel drive motor may rotate in the same direction, but when the left wheel drive motor and the right wheel drive motor rotate at different speeds or in opposite directions, the driving direction of the main body 10 may be switched.

The weeding unit 1700 mows the lawn on the ground surface while the mobile robot is driving. The weeding unit 1700 is provided with a brush or blade for mowing the lawn to mow the lawn on the ground through rotation.

The obstacle sensing unit 1402 may include a plurality of sensors to sense an obstacle existing in front of the mobile robot. The obstacle sensing unit 1402 may sense an obstacle in front of the main body that is, in a driving direction, using at least one of laser, ultrasonic, infrared, and 3D sensors.

In addition, the obstacle sensing unit 1402 may include a camera that photographs the front side to sense an obstacle. The camera, which is a digital camera, may include an image sensor (not shown) and an image processing unit (not shown). The image sensor, which is a device that converts an optical image into an electrical signal, is composed of a chip in which a plurality of photo diodes are integrated, and a pixel is exemplified as a photo diode. Charges are accumulated in each of the pixels by an image formed on the chip by light passing through a lens, and the charges accumulated in the pixels are converted into an electrical signal (e.g., voltage). As an image sensor, CCD (Charge Coupled Device), CMOS (Complementary Metal Oxide Semiconductor), or the like are well known. Furthermore, a DSP or the like may be provided as the image processing unit.

The position sensing unit 1401 includes a plurality of sensor modules for transmitting and receiving position information. The position sensing unit 1401 includes a GPS module that transmits and receives a GPS signal, or a position sensor module that transmits and receives position information from a position information transmitter 50 (FIG. 3). For example, when the position information transmitter transmits a signal in any one of ultrasonic, UWB (Ultra-Wide Band), and infrared methods, a sensor module that transmits and receives an ultrasonic, UWB, or infrared signal is provided in a corresponding manner.

When implemented as a UWB (Ultra-Wide Band) sensor module, even when an obstacle exists between the position information transmitter 50 and the mobile robot 100, a signal may be transmitted and received through the obstacle, or the like, and thus a ultra-wideband signal (or UWB signal) may be transmitted and received efficiently within a predetermined area.

In the present disclosure, unless otherwise described, it may be assumed that the position information transmitter 50 and the mobile robot 100, the position information transmitter 50 and the terminal 200, and the mobile robot 100 and the terminal 200 are provided with at least one UWB sensor module to exchange an ultra-wideband signal (or UWB signal) with each other.

In addition, even when the mobile robot 100 drives by following the terminal 200, the position may be determined using the above-described sensor module.

For example, when the mobile robot 100 drives by following the terminal 200, the terminal and the mobile robot each have a UWB sensor to perform wireless communication with each other. The terminal may transmit a signal from the UWB sensor provided therein, and the mobile robot may determine the position of the terminal based on a signal of the terminal received through the UWB sensor to move by following the terminal.

As described above, the ultra-wideband signal of the UWB sensor may transmit a signal through an obstacle, signal transmission is not affected even when the user moves with the terminal. However, in the case of an obstacle having a predetermined size or more, transmission distance may be reduced even when a signal is not transmitted or passed therethrough.

Furthermore, UWB sensors provided in the terminal and the mobile robot may estimate or measure a distance between the sensors. When the mobile robot drives by following the terminal, the mobile robot controls driving so as not to deviate from a predetermined distance according to the distance to the terminal. In other words, the mobile robot may drive by following the terminal while maintaining an appropriate distance so that a separation distance from the terminal is not too close or too far.

The position sensing unit 1401 may include one or a plurality of UWB sensors. For example, when the position sensing unit 1401 is provided with two UWB sensors, they may be provided at the left and right sides of the mobile robot main body, respectively, to receive signals, and compare a plurality of received signals to sense the position.

For example, when distances measured by the sensor at the left side and the sensor at the right side are different, a relative position of the mobile robot and the terminal, and a direction of the mobile robot may be determined based on them.

On the other hand, in addition to the obstacle sensing unit 1402 and the position sensing unit 1401 described above, the sensing unit 1400 may include various sensors, such as a cliff sensor provided on a rear surface of the main body to sense a cliff, a rain sensor that senses humidity or rainy weather conditions, a proximity sensor, a touch sensor, an RGB sensor, a battery gauge sensor, an acceleration sensor, a geomagnetic sensor, a gravity sensor, a gyroscope sensor, an illuminance sensor, an environmental sensor (thermometer, radiation sensor, heat sensor, gas sensor, etc.), a plurality of 360-degree sensors, a ground condition sensor, and the like.

In addition, the sensing unit 1400 may include at least one tilt sensor (not shown) to sense the movement of the main body. The tilt sensor calculates a tilted direction and angle when tilted in the front, rear, left, and right directions of the main body. A tilt sensor, and an acceleration sensor, or the like, may be used as the inclination sensor, and in the case of the acceleration sensor, any one of a gyro type, an inertial type, and a silicon semiconductor type may be applicable thereto. Moreover, in addition, various sensors or devices capable of sensing the movement of the main body may be used.

The controller 1800 controls the input/output of data, and controls the drive unit 1300 so that the mobile robot drives according to the settings. The controller 1800 may control the drive unit 1300 to independently control the operation of the left wheel drive motor and the right wheel drive motor, thereby controlling the main body 10 to drive in a straight or rotating manner.

The controller 1800 determines a driving direction in response to a signal received through the sensing unit 1400 to control the drive unit. In addition, the controller 1800 controls the drive unit 1300 to allow the mobile robot to drive or stop according to a distance from the terminal and to vary the driving speed. Accordingly, the mobile robot may move by following a position corresponding to a positional change of the terminal.

Furthermore, the controller 1800 may control the mobile robot to move by following the terminal 200 according to a setting mode.

Moreover, the controller 1800 may set a virtual boundary for an area based on position information received from the terminal 200 or position information calculated through the position sensing unit 1401. Besides, the controller 1800 may set any one of areas formed by the set boundary as the driving area. The controller 1800 connects discontinuous position information with a line or a curve to set a boundary in a closed loop shape, and sets an inner area to the driving area. In addition, when a plurality of boundaries are set, the controller 1800 may set any one of areas formed by the boundary as the driving region.

When the driving area and a resultant boundary are set, the controller 1800 controls the drive unit 1300 to drive within the driving area so as not to deviate from the set boundary. The controller 1800 calculates a current position based on the received position information, and controls the drive unit 1300 to allow the calculated current position to be located within a driving area set by the boundary.

Moreover, the controller 1800 may determine obstacle information received by the obstacle sensing unit 1402 to drive by avoiding an obstacle. Besides, the controller 1800 may modify a preset driving area, if necessary, based on the obstacle information.

For example, the controller 1800 may control the drive unit 1300 to pass an obstacle by changing the movement direction or driving path or to drive by avoiding the obstacle in response to obstacle information received from the obstacle sensing unit.

Furthermore, when a cliff is sensed, the controller 1800 may set not to approach more than a predetermined distance. In addition, the controller 1800 may change the driving direction according to a user's selection input through the terminal 200 by transmitting driving information with respect to the sensed obstacle to the terminal 200 to be displayed on the terminal.

The power supply unit 1900 includes a rechargeable battery (or battery module) (not shown). The battery may be detachably mounted on the mobile robot 100. When it is sensed that the battery gauge is insufficient through the sensing unit 1400, the controller 1800 may control the drive unit 1300 to move to a position of a charging station for battery charging. When the presence of the charging station is sensed by the sensing unit 1400, the charging of the battery is carried out.

Next, a main configuration of the terminal 200 communicating with the mobile robot 100 according to the present disclosure will be described with reference to FIG. 2C.

Referring to FIG. 2C, the terminal 200 includes a mobile terminal that can be moved by a user, and a communication unit 210, an input unit 220, a UWB module 230, a sensing unit 240, a display module 251, a memory 260, and a controller 280.

The communication unit 210 may communicate with an external server or mobile robot 100 through wireless communication. The communication unit 210 includes a communication module such as Wi-Fi and Wi-Bro as well as short-range wireless communication such as ZigBee and Bluetooth to transmit and receive data. In addition, the communication unit 210 may include a UWB module that transmits an ultra-wideband signal.

The input unit 220 may include an input element such as at least one button, switch, and touch pad.

The display module 251 may include a touch sensor to receive a control command through a touch input. Furthermore, the display module 251 may be configured to output a control screen for controlling the mobile robot 100 and a map screen on which a set boundary and a position of the mobile robot 100 are displayed.

Data related to driving of the mobile robot 100 may be stored in the memory 260. In addition, the memory 260 may store the position information of the mobile robot 100 and the terminal 200, and store information on a driving area of the mobile robot and a boundary thereof. For example, the memory 1600 stores data that can be read by a microprocessor, and may be any one of a hard disk drive (HDD), a solid state disk (SSD), a silicon disk drive (SDD), a ROM, a RAM, a CD-ROM, a magnetic tape, a floppy disk, or an optical data storage device.

The sensing unit 240 may include at least one or more of a position sensing unit (not shown) for transmitting and receiving position information, a gyro sensor and an acceleration sensor for sensing a change in the spatial movement of the terminal 200, a geomagnetic sensor, and an inertia measurement unit (IMU) sensor.

The position sensing unit includes a plurality of sensor modules for transmitting and receiving position information. For example, the position sensing unit may include a GPS module, a UWB (Ultra-Wide Band) module, a geomagnetic sensor, an acceleration sensor, a gyro sensor, and the like to obtain the coordinates of a point indicated through a posture change such as tilt as well as the current position of the terminal 200.

The UWB module 230 included in the position sensing unit or a separate UWB module 230 may exchange a ultra-wideband signal with the mobile robot 100 and/or the position information transmitter 50. Thus, the position sensing unit may obtain not only the position of the terminal 200, but also the position of the mobile robot 100 based on the terminal 200, the position of the position information transmitter 50 based on the terminal 200, and the position of a specific position information transmitter 50 based on the mobile robot 100, and the like.

The UWB module 230 may transmit or receive an ultra-wideband signal through the UWB module provided in the mobile robot 100. The terminal 200 may perform the role of a "remote control device" in the sense that it can communicate with the mobile robot 100 to control the driving or weeding operation of the mobile robot 100.

In addition to the UWB module 210, the terminal 200 may further include a gyro sensor and a distance measurement sensor.

The gyro sensor may detect a change in values of three axes according to the movement of the terminal 200. Specifically, the terminal 200 may sense an angular velocity according to a movement in which at least one of values in x, y, and z axes changes.

Furthermore, the gyro sensor may use values in x, y, z axes sensed at a specific time point as a reference point, and sense values in x', y', z' axes changed based on the reference point after a predetermined input/predetermined period of time has elapsed. To this end, in addition to the gyro sensor, a magnetic sensor (not shown) and an acceleration sensor (not shown) may be additionally provided. A distance measuring sensor may emit at least one of a laser light signal, an IR signal, an ultrasonic signal, a carrier wave frequency signal, and an impulse signal to calculate a distance from the terminal 200 to the corresponding signal based on a signal reflected therefrom.

To this end, the distance measuring sensor may include, for example, a Time of Flight (ToF) sensor. For example, in the case of the ToF sensor, it may include a transmitter that emits an optical signal modified at a specific frequency and a receiver that receives and measures a reflected signal, and when provided in the terminal 200, the transmitter and the receiver may be disposed to be spaced apart from each other.

Hereinafter, the aforementioned laser optical signal, IR signal, ultrasonic signal, carrier frequency signal, impulse signal, and ultra-wideband signal may be collectively referred to as a "signal". In the present specification, an "ultra-wideband signal" that is little affected by an obstacle has been described as an example. Therefore, the distance measurement sensor may be said to play a role of calculating a distance from the terminal 200 to a point from which the signal is emitted. In addition, the distance measurement sensor may include one or a plurality of transmitters that emit signals and receivers that receive reflected signals.

Hereinafter, FIG. 3 is a conceptual view for explaining a signal flow of devices for setting a boundary for a mobile robot, for example, the mobile robot 100, the terminal 200, the GPS 60, and the position information transmitter 50.

When the position information transmitter 50 is provided with a UWB sensor to transmit a signal, a signal related to position information may be received from the position information transmitter 50 through a UWB module provided in the terminal 200. At this time, a signal method of the position information transmitter 50 and a signal method between the mobile robot 100 and the terminal 200 may be the same or different.

For example, the terminal 200 may transmit ultrasonic waves and the mobile robot 100 may receive the ultrasonic waves from the terminal 200 to drive by following the terminal 200. For another example, a marker may be attached to the terminal 200, and the mobile robot 100 may capture a driving direction of the terminal to recognize the marker attached to the terminal 200, thereby allowing the mobile robot 100 to drive by following the terminal 200.

In FIG. 3, position information may be received from the position information transmitter 50 or the GPS 60. For a signal corresponding to the position information, a GPS signal, an ultrasonic signal, an infrared signal, an electromagnetic signal, or a UWB (Ultra-Wide Band) signal may be used.

Among them, the UWB (Ultra-Wide Band) signal has an advantage in that it can pass through an obstacle unlike the infrared signal, and has a much smaller positional error compared to the GPS signal. Accordingly, in the present disclosure, the UWB signal will be mainly described, but it does not mean that the other signals or the GPS signal are clearly excluded.

The mobile robot must collect position information in order to set a driving area and a boundary. The mobile robot 100 may collect position information by setting a point in an area as a reference position. At this time, any one of an initial starting point, a position of a charging station, and the position information transmitter 50 may be set as the reference position. The mobile robot 100 may generate and store coordinates and a map for an area based on the set reference position. When a map is generated, the mobile robot 100 may move based on the stored map.

Furthermore, the mobile robot 100 may set a new reference position and determine a position within the area based on the newly set reference position for each operation.

In addition, the mobile robot 100 may receive position information collected from the terminal 200 moving in a predetermined path. The terminal 200 may move arbitrarily, and the path may be changed according to a subject that moves it, but in the case of setting the driving area of the mobile robot, it is preferable to move along an edge of the driving area.

The terminal 200 calculates a position within the area as coordinates based on a reference position. Furthermore, the mobile robot 100 may collect position information while moving by following the terminal 200.

When the terminal 200 or the mobile robot 100 independently moves along a predetermined path, the terminal 200 or the mobile robot 100 may calculate a current position based on a signal transmitted from the GPS 60 or the position information transmitter 50.

The mobile robot 100 and the terminal 200 may move by setting the same reference position for a predetermined area. When the reference position changes for each operation, a reference position set with respect to the terminal 200 and position information collected therefrom may be transmitted to the mobile robot 100. Then, the mobile robot 100 may set a boundary based on the received position information.

Meanwhile, the mobile robot 100 and the terminal 200 may obtain relative positions with respect to each other using an ultra-wide band (UWB). To this end, either one of the UWB modules may be a UWB anchor and the other one may be a UWB tag.

For example, the UWB module 230 of the terminal 200 may operate as a "UWB tag" that emits an ultra-wideband signal, and the UWB module of the mobile robot 100 may be an anchor that receives an ultra-wideband signal.

However, it should be noted in advance that it is not limited thereto. For example, the UWB module 230 of the terminal 200 may operate as a UWB anchor, and the UWB module of the mobile robot 100 may operate as a UWB tag. In addition, the UWB module may include one UWB anchor and a plurality of UWB tags.

A method of allowing the mobile robot 100 and the terminal 200 to obtain relative positions with respect to each other through UWB communication technology is as follows. First, a separation distance between the mobile robot 100 and the terminal 200 is calculated using distance measurement technology such as Time of Flight (ToF) technology.

Specifically, a first impulse signal, which is an ultra-wideband signal radiated from the terminal 200, is transmitted to the mobile robot 100. To this end, the UWB module of the terminal 200 may operate as a "UWB tag" for sending data and the UWB module of the mobile robot 100 as a "UWB anchor" for receiving data.

Here, the ultra-wideband signal (or impulse signal) may be efficiently transmitted and received even when an obstacle exists within a specific space, wherein the specific space has a radius of several tens of meters (m).

The first impulse signal may be received through the UWB anchor of the mobile robot 100. The mobile robot 100 that has received the first impulse signal transmits a response signal to the terminal 200. Then, the terminal 200 may transmit a second impulse signal, which is an ultra-wideband signal for the response signal, to the mobile robot 100. Here, the second impulse signal may include delay time information calculated based on a time at which the response signal is received and a time at which the second impulse signal is transmitted accordingly.

The controller of the mobile robot 100 may calculate a distance between the mobile robot 100 and the terminal 200 as follows, based on the time when the response signal is transmitted, the time when the second impulse signal arrives at the UWB anchor of the mobile robot 100 and the delay time information included in the second impulse signal.

$$Distance = c \times \frac{t_2 - t_1 - t_{reply}}{2}$$

Here, $t_2$ is an arrival time of the second impulse signal, $t_1$ is a transmission time of the response signal, $t_{reply}$ is a delay time, and $c$ is a constant value representing the speed of light.

In this way, a distance between the mobile robot 100 and the terminal 200 may be obtained by measuring a time difference between signals transmitted and received between the UWB tag and the UWB anchor provided in the mobile robot 100 and the terminal 200.

In addition, in the same or similar manner, a separation distance between the mobile robot 100 and the position information transmitter 50, and a separation distance between the terminal 200 and the position information transmitter 50 may also be obtained.

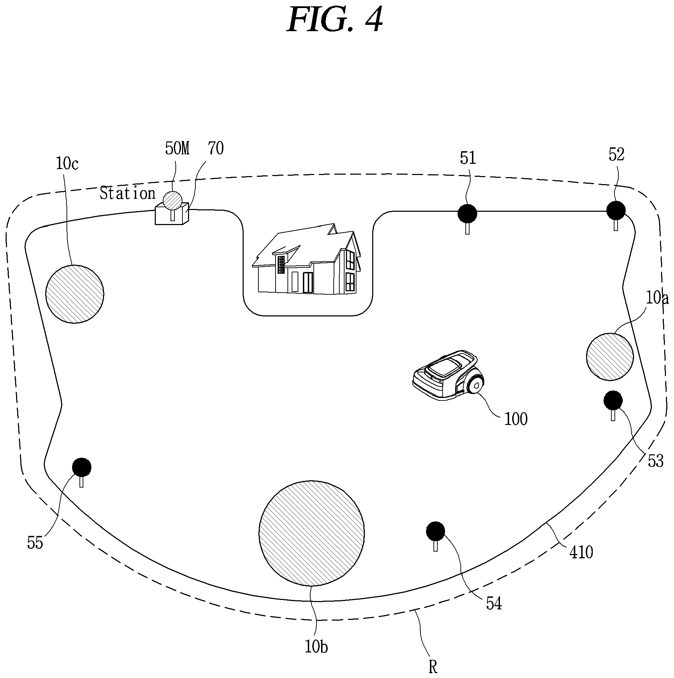

Hereinafter, with reference to FIG. 4, a description will be given of setting a boundary for the mobile robot 100 without burying a wire.

Using the position information transmitter 50 and the terminal 200, the mobile robot 100, or the position information transmitter 50 and the mobile robot 100 without burying a wire, a virtual boundary, which is a reference of the driving area, may be set. The driving area divided based on this boundary may be referred to as a "wireless area".

There may be one or a plurality of "wireless areas". Furthermore, one wireless area may include a plurality of spot areas additionally set in the relevant area to allow a lawn mowing function performed by the mobile robot 100 to be more efficiently performed.

A boundary must be set to allow the mobile robot 100 to perform lawn mowing while moving a set driving area in an outdoor area. In addition, a driving area in which the mobile robot 100 will drive, that is, a wireless area, is designated inside the set boundary.

Referring to FIG. 4, in addition to the illustrated house, various obstacles 10a, 10b, and 10c may exist outdoors. Here, the obstacles 10a, 10b, and 10c may include both fixed and moving obstacles such as a building, a rock, a tree, a swimming pool, a pond, a sculpture, and a garden that exist outdoors. Furthermore, the size and shape of the obstacles 10a, 10b, and 10c may also vary greatly.

When an obstacle exists close to a set boundary, the boundary should be set to avoid these various obstacles 10a, 10b, and 10c from the beginning.

On the other hand, when the obstacles 10a, 10b, and 10c exist inside the driving area based on a boundary 410 set as shown in FIG. 4, additional boundaries for each of the obstacles 10a, 10b, and 10c must be set or the existing boundary 410 must be changed.

In addition, in the present disclosure, a plurality of position information transmitters 50M, 51, 52, 53, 54, 55 may be installed in advance in a predetermined area in order to set a boundary without burying a wire.

The plurality of position information transmitters 50M, 51, 52, 53, 54, 55 may transmit signals. Specifically, the plurality of position information transmitters 50M, 51, 52, 53, 54, 55 may transmit signals to each other or may transmit signals to the mobile robot 100 and/or the terminal 200.

Here, the signal may include, for example, a UWB signal, an ultrasonic signal, an infrared signal, a Bluetooth signal, a Zigbee signal, and the like, but will be described below as a UWB signal.

At least three or more of the plurality of position information transmitters 50M, 51, 52, 53, 54, and 55 may be installed to be spaced apart from each other. In addition, the plurality of position information transmitters 50M, 51, 52, 53, 54, 55 may be installed at a high point above reference height in order to minimize signal interference when the UWB sensor is not included.

The plurality of position information transmitters 50M, 51, 52, 53, 54, 55 are preferably installed at positions adjacent to the boundary to be set. The plurality of position information transmitters 50M, 51, 52, 53, 54, 55 may be installed outside or inside the boundary to be set.

For example, in FIG. 4, it is illustrated that a plurality of position information transmitters 50M, 51, 52, 53, 54, 55 are installed inside the boundary (R), but the present disclosure is not limited thereto. For example, the plurality of position information transmitters 50M, 51, 52, 53, 54, 55 may be installed outside the boundary (R), or some of them may be installed inside the boundary (R) and the others outside the boundary (R).

When the position information transmitter 50M, 51, 52, 53, 54, 55 includes a UWB sensor, an ultra-wideband signal may be sent and received to and from the mobile robot 100 and/or the terminal 200 located in a predetermined area, thereby calculating the position information of the mobile robot 100 and/or the terminal 200.

For example, the mobile robot 100 may compare the magnitudes/intensities of signals from the plurality of position information transmitters 50M, 51, 52, 53, 54, 55 to calculate separation distances and directions with respect to the position information transmitters, respectively, thereby calculating the position of the mobile robot 100. A method of calculating the position information of the terminal 200 may be similarly performed.

In one example, at least one of the plurality of position information transmitters 50M, 51, 52, 53, 54, 55, for example, the position information transmitter 50M, may be a UWB anchor capable of AoA (Angle Of Arrival) positioning that can recognize an angle, which is a direction of the signal received from the UWB tag. In this way, when the angle of the received signal is recognized, more precise position recognition for the UWB tag is allowed

Furthermore, at least one of the plurality of position information transmitters 50M, 51, 52, 53, 54, and 55 may be a reference position information transmitter 50M for setting a boundary. The reference position information transmitter 50M may be installed at a place where a charging station 70 is located, for example, as illustrated in FIG. 4.

The coordinate values of the plurality of position information transmitters 50M, 51, 52, 53, 54, 55 may be set based on the reference position information transmitter 50M. Specifically, the reference position information transmitter 50M and the remaining position information transmitters 51, 52, 53, 54, 55 may exchange signals with each other to calculate x and y coordinate values corresponding to the positions of the other position information transmitters with the reference position information transmitter 50M as a zero point. Accordingly, position information for the plurality of position information transmitters 50M, 51, 52, 53, 54, 55 may be set.

When the mobile robot 100 uses the charging station 70 in which the reference position information transmitter 50M is located as the starting point of the operation, it may be possible to more easily obtain the position of the mobile robot 100 for each operation. In addition, when the battery gauge is insufficient while the mobile robot 100 is traveling, the mobile robot 100 may move to the reference position information transmitter 50M where the charging station 70 is located to charge the battery.

When the reference position information transmitter 50M is installed where the charging station 70 is located as described above, there is no need to set the position of the charging station 70 separately.

On the other hand, when the mobile robot 100 is significantly away from the reference position information transmitter 50M due to the driving of the mobile robot 100, a position information transmitter close to a current position of the mobile robot may be switched to the reference position information transmitter based on the amount/intensity of the signals transmitted from the plurality of position information transmitters 50M, 51, 52, 53, 54, 55.

Meanwhile, when the charging station 70 is located outside the boundary (R), unlike in FIG. 4, that is, when the boundary is set at an inner side of the charging station 70, the mobile robot 100 may leave the boundary and return to the charging station to charge the battery.

However, when the charging station 70 is located out of the boundary, a moving area (not shown) may be additionally set between the charging station 70 and the driving area set within the boundary, thereby guiding the mobile robot 100 to return to the charging station 70 located outside the boundary.

Hereinafter, a method of setting a boundary for the mobile robot 100 and a driving area based on the boundary using the plurality of position information transmitters 50M, 51, 52, 53, 54, 55 and the terminal 200 will be described in more detail.

First, the terminal 200 moves from the position information transmitter 55 installed in the area to a first path along an edge of the area where the grass is planted. At this time, the terminal 200 may be moved by a person, but may also be moved by another means of transportation such as a drone.

The terminal 200 may determine its current position through a position information transmitter or GPS. Furthermore, as the terminal 200 moves, a distance and a direction to each of the position information transmitters may be calculated based on signals transmitted from the plurality of position information transmitters. Accordingly, the coordinates of a plurality of points corresponding to a positional change of the terminal 200 may be recognized, and stored as position information.

Each of the plurality of position information transmitters 50M, 51, 52, 53, 54, and 55 may transmit UWB including unique information for distinguishing signals.

While moving to the first path, the terminal 200 may analyze and process a first signal transmitted from the first position information transmitter 51, a second signal transmitted from the second position information transmitter 52, and a third signal transmitted from the third position information transmitter 53, and a fourth signal transmitted from the fourth position information transmitter 54 in a distinguished manner.

When the movement corresponding to the first path is completed, for example, when the first path forms a closed curve or reaches a designated end point, the terminal 200 transfers the stored position information to the mobile robot 100 while moving on the first path.

Then, the mobile robot 100 may set a line or an outer line sequentially connecting the stored position information while the terminal 200 moves along the first path as the boundary 410 inside the area (R).

Based on the boundary 410 set as described above, the inner area may be set as a driving area or a wireless area.

The mobile robot 100 may test drive in the set driving area or wireless area. At this time, part of the boundary and/or the driving area may be modified by the mobile robot 100. For example, when a new obstacle is sensed, when an existing obstacle is removed, or when an uneven or sunken point on the ground is sensed, when it is sensed as a non-driving point due to the driving performance of the mobile robot 100, part of a boundary and/or a driving area for the mobile robot 100 may be modified in consideration of the collected situation information.

On the other hand, although not shown, in another embodiment, while the terminal 200 moves on the first path, the mobile robot 100 may follow the position of the terminal 200 at a predetermined distance, thereby setting a boundary and/or a driving area for the mobile robot 100 without additional test driving.

In the present disclosure, the position information transmitter operates as a "UWB anchor" that transmits a UWB signal. Furthermore, the UWB module provided in the mobile robot 100 operates as a "UWB tag" that receives a UWB signal.

In addition, even after a virtual boundary is set as described above, in order to calculate the real-time position of the mobile robot 100, a signal, that is, a UWB signal, is periodically exchanged for mutual communication between the plurality of position information transmitters 50M, 51, 52, 53, 54, 55 and/or between the plurality of position information transmitters 50M, 51, 52, 53, 54, 55 and the mobile robot 100.

In other words, UWB (Ultra-Wideband) communication is performed periodically and continuously between a UWB anchor and another UWB anchor, and between a UWB anchor and a UWB tag.

In the case of the plurality of position information transmitters 50M, 51, 52, 53, 54, 55 with fixed positions, the plurality of position information transmitters 50M, 51, 52, 53, 54, 55 may use the same communication path, and the strength or direction of a signal transmitted from one to another will remain the same, except for noise generated due to outdoor characteristics.

Accordingly, in the present disclosure, using a signal exchanged between the plurality of position information transmitters 50M, 51, 52, 53, 54, 55 and the mobile robot 100, a method of sensing the entry of a moving object within the boundary and monitoring its position is implemented.

As used herein, the "moving object" includes all people, animals, things that can move on their own or various objects moved by a means of transport. In addition, in this specification, the "moving object" is applied to both a case where there is no legitimate authority to enter into the boundary, for example, an intruder, and a case where a legitimate authority to enter into the boundary is obtained, or permission is obtained from such a person.

Furthermore, as used herein, the "entry of the moving object" denotes a case where the presence of the moving object is sensed for at least a predetermined period of time or more than a predetermined number of times. Therefore, a case where the moving object passes very quickly may be excluded.

In addition, as used herein, the "entry of the moving object into the boundary" denotes that the moving object enters into the boundary and is located on a communication path between at least the plurality of position information transmitters or between a position information transmitter and the mobile robot, or passed through the communication path.

In addition, in the present specification, as already described with reference to FIG. 4, it will be described under the assumption that signals can be exchanged with each other for communication between the plurality of position information transmitters installed around the boundary and between the plurality of position information transmitters and the mobile robot.

Specifically, the controller of the mobile robot 100 according to the present disclosure may set a virtual boundary for the area based on position information calculated based on a signal, for example, a UWB signal, from a position information transmitter installed in the area.

When a virtual boundary is set as described above, the controller of the mobile robot 100 may calculate location determination-related data from a UWB signal transmitted between the position information transmitters and a UWB signal transmitted between the communication unit of the mobile robot 100 and the position information transmitter, respectively.

Here, the location determination-related data includes all data related to position measurement of a UWB anchor and tag calculated based on a UWB signal transmitted from one to another between the position information transmitters and a response signal thereto, and a UWB signal transmitted from a position information transmitter to the mobile robot 100 and a response signal thereto.

Specifically, the location determination-related data may include all data related to distance information and delay time information (or time difference information) calculated based on a transmission signal and a response signal as well as signal strength information, signal direction and angle information of the transmitted signal.

The controller of the mobile robot 100 may monitor a change in the calculated location determination-related data, and sense the entry of a moving object into the boundary in response to an amount of the change out of a reference range.

Specifically, while signals are transmitted between the plurality of position information transmitters, when an obstacle, that is, a moving object, exists between the plurality of position information transmitters, signal disturbance occurs since the transmitted signal is passed through (or partially reflected on) the moving object and transmitted to another position information transmitter.

Accordingly, when part of distance information and time difference information calculated based on a signal strength, a signal direction and angle of a signal transmitted between the plurality of position information transmitters and a response signal to the transmitted signal has changed to an extent that exceeds the reference range, it may be seen that a moving object exists or has passed between the plurality of position information transmitters.

Here, the reason for requiring a change that exceeds the reference range in order to see the presence of the moving object is to exclude a change of location determination-related data due to noise generated by the characteristics of outdoor positioning.

Accordingly, the reference range may be said to denote a minimum threshold range of signal disturbances generated when a moving object having a predetermined size or more exists between communication paths of the plurality of position information transmitters.

As such, when an amount of change in the location determination-related data is out of the reference range, it is determined that an obstacle is placed between the communication paths of the plurality of position information transmitters to sense that the moving object has entered into the boundary. Accordingly, the controller of the mobile robot 100 performs a monitoring operation on the moving object with a preset operation.

At this time, the monitoring operation may vary according to the current position of the mobile robot, the operation state of the mobile robot, and the sensed position of the moving object. This will be described in more detail below.

On the other hand, while sensing whether the moving object has entered, it is sufficient that the mobile robot 100 is in communication with the plurality of position information transmitters, and does not need to be in operation.

For example, even while the mobile robot 100 is charging the battery at the charging station, it may be possible to sense the entry of a moving object into the boundary by monitoring an amount of change in location determination-related data from signals received from nearby position information transmitters.

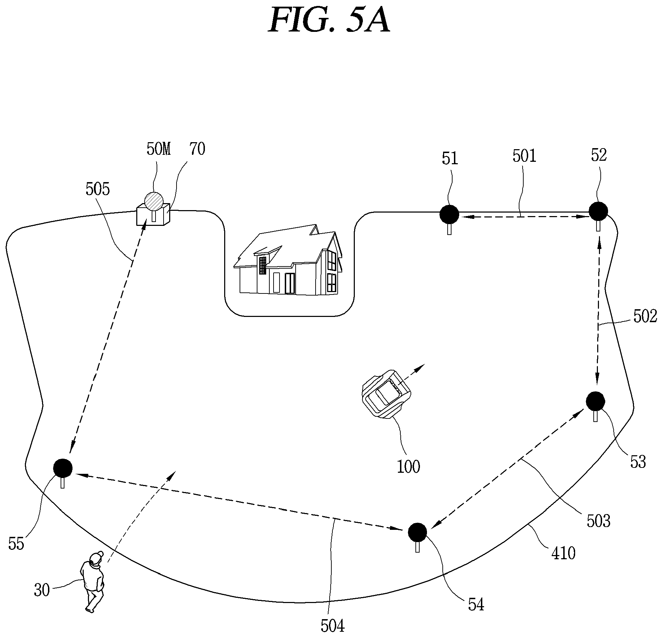

Hereinafter, a method in which the mobile robot 100 according to the present disclosure senses a moving object entering into a virtual boundary to perform a monitoring operation will be described in detail with reference to FIGS. 5A to 5C.

First, referring to FIG. 5A, even after the boundary 410 is once set in the area as described with reference to FIG. 4, the plurality of position information transmitters 50M, 51, 52, 53, 54, 55 installed in the area may perform UWB communication with another position information transmitter adjacent thereto.

For example, UWB signals (hereinafter, "first signals") may be transmitted to each other between the first position information transmitter 51 and the second position information transmitter 52, between the second position information transmitter 52 and the third position information transmitter 53, between the third position information transmitter 53 and the fourth position information transmitter 54, between the fourth position information transmitter 54 and the fifth position information transmitter 55, and between the fifth position information transmitter 55 and the reference position information transmitter 50M through communication paths 501, 502, 503, 504, 505.

In this way, information such as signal strength, signal direction, distance data, and angle data measured through the first signal is periodically transmitted to the mobile robot 100. Accordingly, the mobile robot 100 continuously acquires location determination-related data such as distance information and angle information between the plurality of position information transmitters.

At this time, when a third party 30 intrudes between the fourth position information transmitter 54 and the fifth position information transmitter 55, a disturbance is generated between the first signal and the response signal transmitted between the fourth position information transmitter 54 and the fifth position information transmitter 55.

Accordingly, signal strength, signal direction, distance data, angle data, and the like corresponding to the UWB signal and response signal transmitted between the fourth position information transmitter 54 and the fifth position information transmitter 55 are changed. This may be recognized as an error in location determination-related data.

On the other hand, since the signal transmitted from the position information transmitter includes identification information for the position information transmitter, the mobile robot 100 may recognize that a signal disturbance is caused by the first signal transmitted between the fourth position information transmitter 54 and the fifth position information transmitter 55.

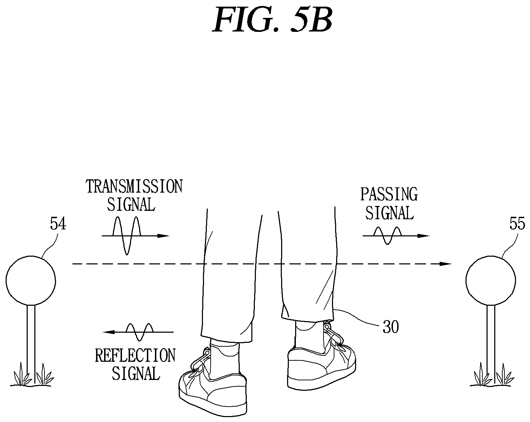

Specifically, referring to FIG. 5B, the first signal transmitted from the fourth position information transmitter 54 to the fifth position information transmitter 55 meets part of the body of the third party 30, and part thereof is reflected and another part thereof is passed therethrough or all passed therethrough but diffracted to be transferred to the fifth position information transmitter 55. In other words, it is switched to a non-line of sight (NLOS) communication environment.

At this time, when the third party 30 is sufficiently staying at the same point, distance data from the fourth position information transmitter 54 and distance data from the fifth position information transmitter 55 may be calculated based on the first signal and the reflection signal transmitted from the fourth position information transmitter 54 and the first signal and the reflection signal transmitted from the fifth position information transmitter 55 to obtain the position of the third party 30.

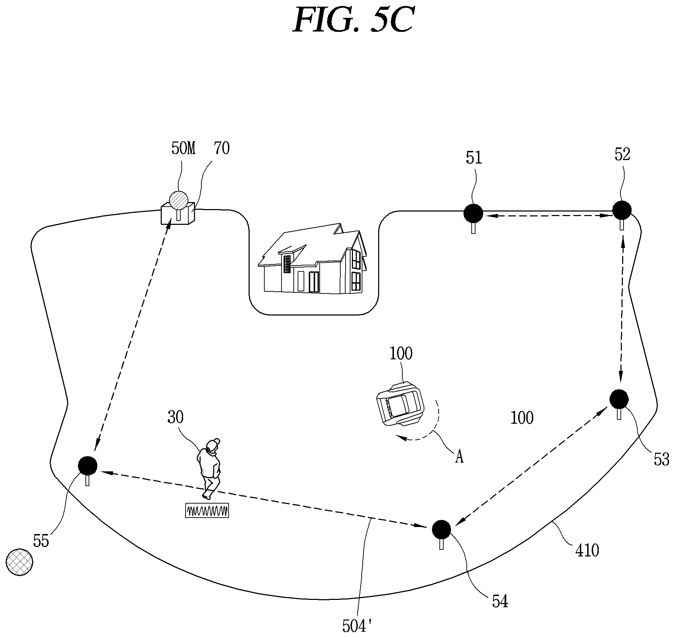

In addition, as illustrated in FIG. 5C, the first signal and the response signal transmitted between the fourth position information transmitter 54 and the fifth position information transmitter 55 are transferred through the changed communication path 504'. Accordingly, an error occurs in the location determination-related data.

As the interval continues, that is, as the time that the third party 30 stays elapses, a data error included in the location determination-related data based on signals transmitted between the fourth position information transmitter 54 and the fifth position information transmitter 55 also increases.

Then, when the third party 30 completely enters into the boundary 410, the communication path between the fourth position information transmitter 54 and the fifth position information transmitter 55 is returned to a previous state. In other words, it is switched to a line of sight (LOS) communication environment.

Furthermore, a data error included in the location determination-related data based on a first signal transmitted between the fourth position information transmitter 54 and the fifth position information transmitter 55 is also removed again.

As described above, the controller of the mobile robot 100 may recognize the position information transmitters 54, 55 that have undergone a process of (1st time point) receiving location determination-related data -> (2nd time point) generating an error in location determination-related data -> (3rd time point) receiving location determination-related data again

Accordingly, it is determined that the moving object has entered between the fourth position information transmitter 54 and the fifth position information transmitter 55 to perform a preset monitoring operation.

For an example, as illustrated in FIG. 5C, the front of the mobile robot 100 may be rotated and moved to face a point where the fourth and fifth position information transmitters 54, 55 are located. Furthermore, when the mobile robot 100 is provided with a camera, the camera may be activated to acquire image information around the fourth and fifth position information transmitters 54, 55.

As described above, in the present disclosure, without additional equipment, a moving object intruding into the boundary may be sensed using the position information transmitters and the mobile robot 100 installed to set the boundary for the mobile robot 100 outdoors. Accordingly, a home guard function capable of monitoring external intrusion without additional equipment or complicated design may be provided even in a large outdoor area.

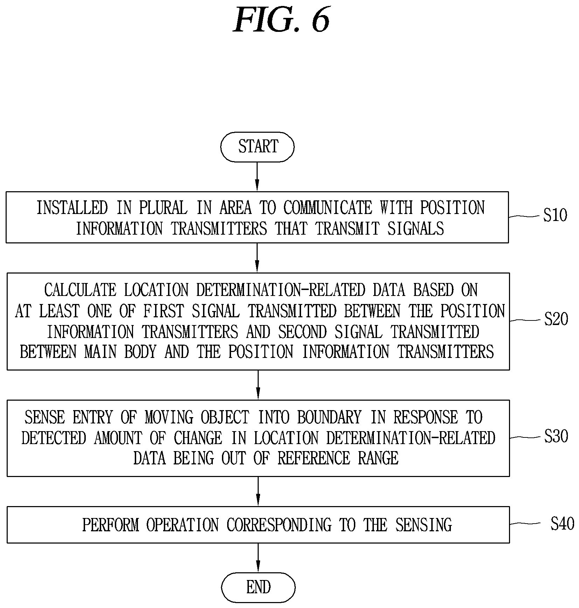

Hereinafter, referring to FIG. 6, a method of controlling a mobile robot for implementing a home guard function in a large outdoor area will be described in more detail.

Referring to FIG. 6, first, the mobile robot 100 according to the present disclosure performs communication with the position information transmitters installed in an area to transmit signals (S10).

For example, the mobile robot 100 and the position information transmitter may perform ultra-wide-band (UWB) communication. In this case, the position information transmitter may operate as a UWB anchor, and the mobile robot 100 may operate as a UWB tag.

Meanwhile, in one embodiment, the mobile robot 100 may set a virtual boundary for an area based on position information calculated based on a signal, for example, a UWB signal, from a position information transmitter.

A method of setting a boundary using the position information transmitters without burying a wire has been described in detail with reference to FIG. 4, and thus a detailed description thereof will be omitted.

Communication is periodically performed between the position information transmitters and between the position information transmitters and the mobile robot 100.

For example, a UWB signal transmitted and received between the position information transmitters may use a first communication path, and a UWB signal transmitted and received between the position information transmitters and the mobile robot 100 may use a second communication path.

Based on the UWB signal transmitted through the first communication path, location determination-related data is calculated so that the mobile robot does not leave the area. Furthermore, based on the UWB signal transmitted through the second communication path, location determination-related data for calculating the current position of the mobile robot is calculated.

Distance information and angle information between the position information transmitters are obtained based on the UWB signal transmitted and received through the first communication path.

In addition, distance data and angle data between the mobile robot 100 and the position information transmitters are obtained in real time based on the UWB signal transmitted and received through the second communication path. Accordingly, the mobile robot 100 may receive distance information and angle information based on UWB signals from fixed position information transmitters while moving a driving area within the boundary, thereby accurately recognizing its own position.

In this way, the controller of the mobile robot 100 may calculate location determination-related data based on at least one of a first signal transmitted between the position information transmitters and a second signal transmitted between a main body, more precisely, a UWB module, of the mobile robot 100 and the position information transmitters (S20).

To this end, the mobile robot 100 may receive data at least 6 times per second from the plurality of position information transmitters, and calculate location determination-related data such as signal strength, signal direction, distance data, and angle data from the received data.

Subsequently, the controller of the mobile robot 100 monitors an amount of change in the calculated location determination-related data, and senses that the moving object has entered into the area when the amount of change exceeds the reference range (S30).

Here, the reference range may denote a minimum threshold range of signal disturbances generated when a moving object having a predetermined size or more exists between communication paths of the plurality of position information transmitters.

Therefore, when an amount of change in the location determination-related data is within the reference range, the controller of the mobile robot 100 determines that it is not the entry of the moving object by regarding this as the effect of noise.

In one embodiment, the controller of the mobile robot 100 may additionally use NLOS/LOS information to determine whether a moving object has entered into the area.

Here, the NLOS/LOS information denotes information on whether an attribute of the transmitted/received UWB signal is a non-line of sight (NLOS) signal or a line of sight (LOS) signal. Alternatively, the NLOS/LOS information denotes information on whether the transmitted/received UWB signal is a non-line of sight (NLOS) channel environment or a line of sight (LOS) channel environment.

The LOS signal denotes linear radio waves that reach the transmission/reception point directly at the line of sight (LOS). The NLOS signal denotes non-linear radio waves propagated by diffraction, reflection, and the like due to non-line of sight (NLOS), that is, being covered by an obstacle or the like.

For example, when a moving object exists between the plurality of position information transmitters, the communication environment or signal attribute of the first signal may be switched from LOS to NLOS.

Accordingly, the controller of the mobile robot 100 may determine that a moving object has entered a communication path of the relevant position information transmitter by responding that an amount of change in location determination-related data calculated based on the transmitted/received UWB signal exceeds the reference range, and an attribute of a signal, that is, a UWB signal, transmitted between any two position information transmitters is changed from either one of a non-line of sight (NLOS) signal and a line of sight (LOS) signal to the other one.

Here, whether an attribute of the UWB signal is a non-line of sight (NLOS) signal or a line of sight (LOS) signal may be determined by acquiring a channel impulse response for the UWB signal.

The channel impulse response (CIR) denotes a response signal in a time domain including a time delay (and signal attenuation, signal interference) due to a multipath or path change of a signal, for example, a UWB signal. The measurement of the channel impulse response may be measured using a known method such as vision information or an inverse discrete Fourier transform (IDFT). In the present disclosure, since it is sufficient to know whether the communication environment is changed, a detailed description of measuring the channel impulse response will be omitted.

In response to the sensing of the entry of the moving object into the boundary as described above, the controller of the mobile robot 100 may perform an operation corresponding to the sensing (S40).

In one embodiment, an operation corresponding to the sensing of the entry of the moving object may be an operation of outputting a notification notifying the entry of the moving object. Here, an output form of the notification may include a preset signal, a beep, a voice, a screen, an LED output, or a preset signal, a beep, a voice, a screen, and an LED output through a terminal in connection therewith

In one embodiment, an operation corresponding to the sensing of the entry of the moving object may include an operation for tracking a position of the moving object.

Furthermore, in another example, the operation corresponding to the sensing of the entry of the moving object may include an operation of allowing the mobile robot 100 to drive based on a position with respect to the moving object. In addition, in another example, the operation corresponding to the sensing of the entry of the moving object may include an operation of transmitting information related to the entry of the moving object and the current position to the outside.

In one embodiment, the controller of the mobile robot 100 may sense the entry of the moving object into the area when an amount of change in the location determination-related data calculated based on the first signal transmitted between the position information transmitters exceeds a reference range.

Furthermore, since then, when an amount of change in the location determination-related data calculated based on the second signal transmitted between the position information transmitter and the mobile robot exceeds a reference range, the movement and position of the moving object may be sensed using a triangulation method or the like.

On the other hand, when an error of the location determination-related data persists for a long period of time, it is necessary to check whether it is due to an error/failure of the position information transmitter, not due to the influence of the moving object.

Accordingly, the controller of the mobile robot 100 may additionally monitor the transmission time and duration time of the UWB signal in which the amount of change in the location determination-related data exceeds the reference range. When the duration time exceeds the threshold value according to the monitoring, a preset operation for checking the position information transmitter may be performed.

Meanwhile, the "moving object" referred to in the present disclosure includes not only an intruder with risk factors such as a third party or an animal, but also an object to be protected, such as a pet or infant, and a user with legitimate authority. The monitoring operation of the mobile robot 100 also varies depending on where an attribute of the moving object corresponds.

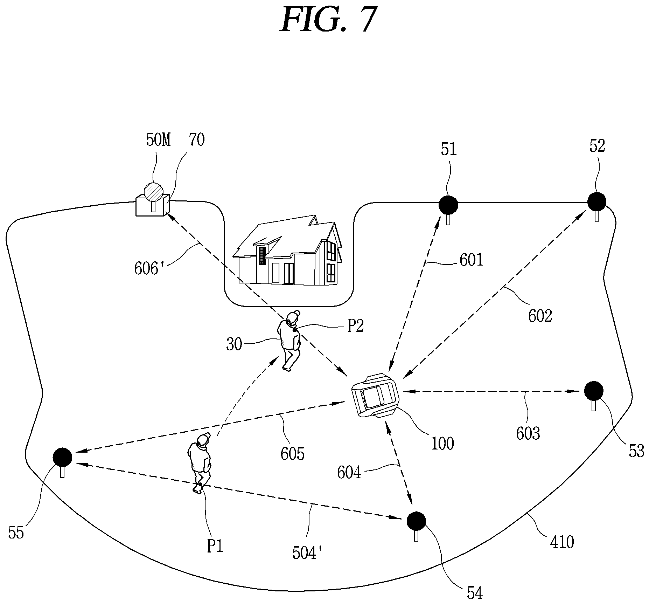

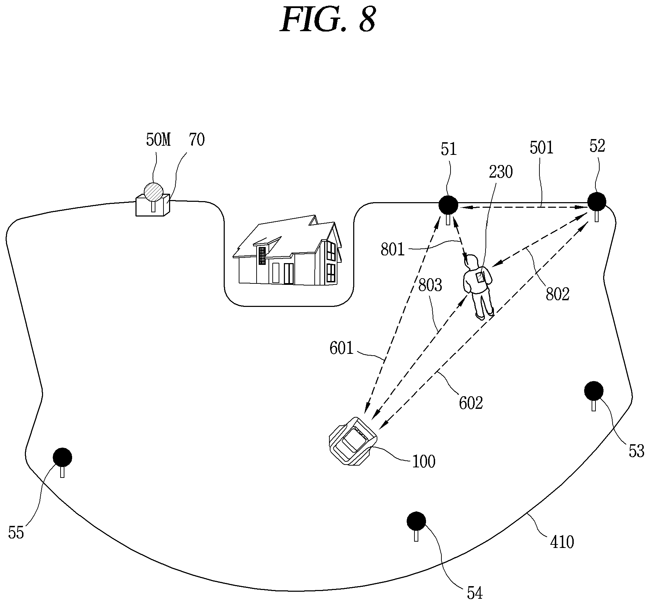

Hereinafter, FIGS. 7 and 8 show different embodiments of a method in which a mobile robot detects a position of a moving object that has entered into a boundary

First, FIG. 7 is a case in which an "intruder" appears as a moving object. In this case, continuous monitoring of the moving object is required.

For example, when the intruder 30 passes and enters between the fourth position information transmitter 54 and the fifth position information transmitter 55, the mobile robot 100 may sense the position of the position information transmitter 54 or 55 that has transmitted a signal 50' in which the amount of change in the location determination-related data is out of the reference range to recognize the entry position of the intruder 30.

To this end, when communicating with the mobile robot 100, the position information transmitters 54, 55 transmit signals including their own identification information. Then, the mobile robot 100 may detect the position information of the position information transmitter that matches the received identification information among the previously stored position information of the position information transmitters.

Distance data to the intruder 30 may be measured based on a delay time between the first signal and the response signal mutually transmitted between the fourth position information transmitter 54 and the fifth position information transmitter 55.

Accordingly, the controller of the mobile robot 100 may recognize the position of a first point (P1) into which the intruder 30 has entered based on the position information of the fourth position information transmitter 54 and the fifth position information transmitter 55 and distance data (and angle data) measured therefrom.

Then, when the intruder 30 moves from the first point (P1) to a second point (P2), a disturbance occurs in a second signal transmitted between the position information transmitter 50M and the mobile robot 100.

Accordingly, contrary to the communication paths 601, 602, 603, 604, 605 of the other position information transmitters 51, 52, 53, 54, 55, the second signal is received at the mobile robot 100 through a changed communication path 606'.

The controller of the mobile robot 100 may detect the position of a moving object based on distance information between its current position and the position information transmitter 50M.

Specifically, the controller of the mobile robot 100 may detect that an error has increased in the location determination-related data calculated from the second signal transmitted from the position information transmitter 50M, and accordingly, recognize that the moving object exists on the communication path 606'.

In addition, the controller of the mobile robot 100 may compare time differences between a second signal transmitted from the position information transmitter 50M and a response time thereto at a first time point prior to the error occurring, and a second signal transmitted and a response signal thereto at a second time point when the error occurs, thereby acquiring distance data and angle data for the moving object from the position information transmitter 50M.

The controller of the mobile robot 100 may obtain its own current position based on the second signal transmitted from another position information transmitter. Specifically, the calculation of the position of the mobile robot using the UWB signal is calculated in real time using TDoA (Time Difference of Arrival) technology that uses a difference in arrival time of the signal, and AOA (Angle Of Arrival) technology that uses a direction angle from which the signal is received.

Now, the controller of the mobile robot 100 may calculate distance information from its current position to the position information transmitter 50M and distance information from the position information transmitter 50M to a moving object to recognize the position of a second point (P2) where the moving object has moved.

Meanwhile, although not shown, a user with legitimate authority may perform a promised operation to allow the mobile robot 100 to recognize his or her entry.

For example, when a user with legitimate authority has a registered terminal, the user may perform a pointing operation to a position information transmitter close to the current position to recognize that he or she is a user who has the registered terminal. Alternatively, a user with legitimate authority may enter into the boundary using a promised path or point to allow the mobile robot 100 to recognize that the mobile robot 100 is not an intruder.

Next, a method of recognizing a position within the area when a moving object is an object to be protected will be described in detail with reference to FIG. 8.

When the moving object is an object to be protected, a UWB antenna 230 may be mounted on the moving object. In other words, identification information on the mounted UWB antenna 230 is stored in the mobile robot 100. The mobile robot 100 may recognize the plurality of position information transmitters as fixed nodes, and the mounted UWB antenna 230 may be recognized as a moving node.

The controller of the mobile robot 100 may communicate with the mounted UWB antenna 230 and the position information transmitter to recognize the position of the moving object through, for example, a triangulation method. Therefore, at this time, there is no need to distinguish and recognize whether the moving object has entered into the area.

First, distance information between the position information transmitters may be obtained based on a first signal transmitted through the first communication path 501 between the first position information transmitter 51 and the second position information transmitter 52.

In addition, the current position of the mobile robot 100 may be obtained based on second signals transmitted through different second communication paths 601, 602 between the mobile robot 100 and the position information transmitters.

Furthermore, the current position of the moving object may be detected by obtaining distance information on the moving object based on the position of the position information transmitter and the UWB signal ("third signal") transmitted to the moving object from the position of the mobile robot,

In addition, the controller of the mobile robot 100 may control the drive unit to move the main body based on the detected current position of the moving object.

Specifically, the controller of the mobile robot 100 may control the drive unit of the mobile robot 100 to disallow the mobile robot 100 to approach the moving object. For example, the controller of the mobile robot 100 may change a driving path or change a driving speed so as to move by avoiding the current position of the moving object.

Meanwhile, the controller of the mobile robot 100 may receive a third signal transmitted from the UWB antenna 230 to sense that the moving object be approaching closer to the mobile robot 100. In this case, the controller of the mobile robot 100 may output a warning alarm and temporarily stop driving.

As described above, according to the present disclosure, in addition to a home guard function for intruders, a safety service may be provided by monitoring whether an object to be protected approaches the mobile robot 100 in operation.

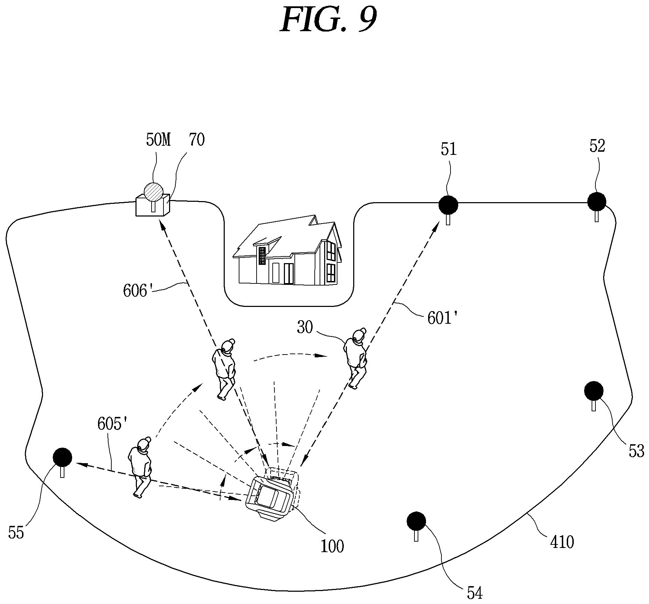

FIG. 9 shows an example of a method of tracking a moving path of a moving object by sensing the entry of the moving object into the boundary and then monitoring the moving object.

The controller of the mobile robot 100 according to the present disclosure may detect the position of a moving object existing within a boundary and then control the drive unit to rotate or move the main body toward the detected position of the moving object.

The UWB tag of the mobile robot 100 obtains its current position based on UWB signals transmitted from a plurality of position information transmitters. In addition, an obstacle existing in a UWB sensing area formed through the UWB tag of the mobile robot 100 may be sensed. Using this, it may be possible to track the movement path of the moving object moving in the driving area inside the boundary.

For example, in FIG. 9, in response to receiving a disturbed first signal 606' from the fifth position information transmitter 100, the mobile robot 100 rotates the main body toward the position of the fifth position information transmitter 100. Then, when the moving object moves to enter into a signal path between the position information transmitter 50M and the mobile robot 100, the disturbed second signal 606' is received at the mobile robot 100 from the position information transmitter 50M.

The controller of the mobile robot 100 may obtain a first position of the moving object corresponding to a first time point at which the first signal 606' is received and a second position of the moving object corresponding to a second time point at which the second signal 606' is received.

Next, when the mobile robot 100 receives the disturbed second signal 601' from the first position information transmitter 100, it may be possible to obtain a third position of the moving object corresponding to the relevant time point, that is, a third time point. Furthermore, the first position, the second position, and the third position may be connected in a time sequence to generate a trajectory, that is, a moving path, of the moving object.

The controller of the mobile robot 100 may transmit path information corresponding to a change in the detected position of the moving object to an external terminal.

Specifically, the movement path for the generated moving object is stored together with time information in the mobile robot 100. In addition, the stored movement path and time information may be transmitted to an external terminal/external server/security company according to a user request or when a predetermined condition is satisfied.

Here, the predetermined condition may include a case where it is estimated that the moving path of the moving object is directed toward an inside of the house, a case where it has passed through a specific point, and the like.

Furthermore, in one embodiment, the mobile robot 100 may output a preset warning alarm as an operation corresponding to the entry of the moving object into the area. Here, the warning alarm may include a preset beep, voice, and LED blinking.

For another example, the mobile robot 100 activates a camera provided in the front to rotate or moves the main body such that the detected position of the moving object is within a field of view of the camera, and then performs a photographing operation to acquire image information on the moving object.

The image information obtained as described above is sent to a preset external terminal/external server/security company according to a user request or when a preset condition is satisfied (e.g., when a moving object approaches or gives an impact to the mobile robot).

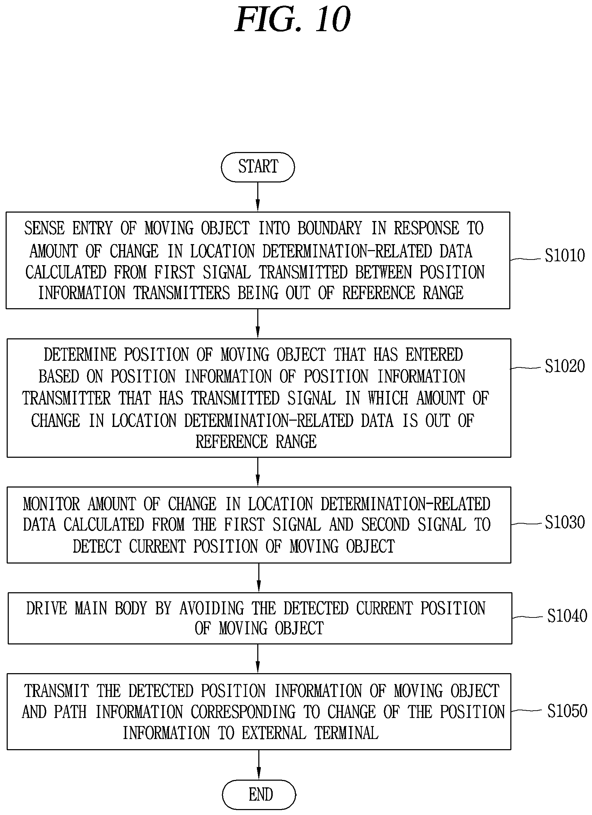

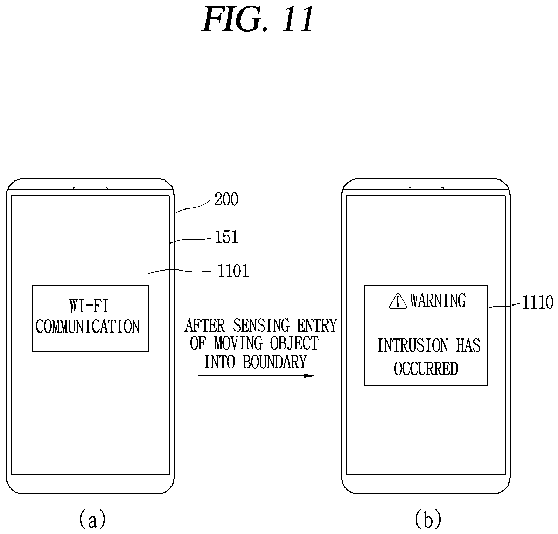

FIG. 10 is a flowchart showing a method in which a mobile robot according to an embodiment of the present disclosure performs driving of a main body and notification of the position of a moving object based on the position of the moving object. Furthermore, FIG. 11 is an example of a terminal screen that notifies the entry of the moving object.

First, referring to FIG. 10, the mobile robot 100 according to the present disclosure may sense the entry of the moving object into the area by responding that an amount of change of the location determination-related data calculated from a signal (i.e., first signal) between the position information transmitters is out of a reference range (S1010).

To this end, the mobile robot 100 may periodically acquire distance information and angle information based on the first signal transmitted between the position information transmitters. In addition, the mobile robot 100 may determine whether the communication environment of the first signal is changed from either one of NLOS and LOS to the other based on a channel impulse response.

Next, the controller of the mobile robot 100 may determine the position of the moving object that has entered based on the position information of the position information transmitter (and another position information transmitter close thereto) that has transmitted a UWB signal in which an amount of change in the location determination-related data exceeds the reference range (S1020).

Then, the amount of change in location determination-related data, for example, distance information and angle information, calculated from the first signal transmitted between the position information transmitters and the second signal transmitted between the position information transmitters and the mobile robot 100 is monitored to detect the current position of the moving object existing inside the boundary (S1030).

Meanwhile, in one embodiment, in order to detect a more accurate position of the moving object, the mobile robot 100 may stop moving. In this case, the mobile robot 100 performs the same role as a position information transmitter fixed at a current position.

In this way, when the current position of the moving object is detected, the moving robot 100 may control the drive unit to allow the main body to move by avoiding the current position of the moving object (S1040). In other words, even when the moving object is detected, the mobile robot 100 may continue to perform the operation based on the current position of the moving object.

Subsequently, the mobile robot 100 may store the position information of the moving object and a plurality of position coordinates corresponding to changes in the position information, and then transmit path information generated based on the stored position coordinates to the external terminal (S1050).

At this time, in order to prevent a load reduction due to transmission, the path information for the moving object may be transmitted only when a preset condition is satisfied.

Referring to FIG. 11, when network communication between the terminal 200 and the mobile robot 100 becomes possible, a first screen 1101 indicating that communication is in progress is displayed on the terminal 200.

Furthermore, in case where the entry of the moving object into the boundary is sensed, when information on the moving object is transmitted from the mobile robot 100, a second screen 1110 including a warning corresponding to the received information is displayed on the terminal 200.

At this time, information on the moving object transmitted from the mobile robot 100 may include an attribute of the moving object, a position of the moving object, and a time point at which the moving object enters into the boundary.

Here, an attribute of the moving object is determined based on whether there is a UWB antenna registered for the moving object, or whether a preset operation that can be viewed as the entry of a legitimate user is sensed. When it does not fall under two cases mentioned above, an attribute of the moving object may be determined as an "intruder".

Meanwhile, although not shown, when a touch input is applied to the second screen 1110, a user interface (UI) capable of selectively performing "clear warning" or "view details" may be provided on the screen.

For example, when "view details" is selected, information on the current position and movement path of the moving object may be provided in the form of text, image, video or the like.

In addition, for example, when "clear warning" is not selected within a predetermined period of time without selecting "view details", an intrusion warning may be notified by increasing an alarm level (e.g., increasing a beep sound, adding a vibration, etc.).

Besides. although not shown, in an example, it may be operated to selectively perform a function of sensing the entry of a moving object within the boundary (first function) and a function of monitoring the position of a moving object moving within the boundary (second function).

Alternatively, in another example, the first function and the second function may be activated during a predetermined time period (e.g., night to dawn) through a user input, and the first function and the second function may be switched to deactivation when the relevant time period has passed.

As described above, a mobile robot and a control method thereof according to an embodiment of the present disclosure may provide a home guard function that senses a moving object even in an open outdoor area with only UWB anchors and UWB tags required to calculate the position of a mobile robot without additional equipment.

In addition, the position and movement path of a moving object existing within a boundary may be obtained using UWB communication, and the mobile robot may be driven by avoiding the position of the moving object or the position and movement path of an intruder may be notified to the outside according to an attribute of the moving object, thereby satisfying both safety and security at the same time without additional equipment even in an open outdoor area.

The present disclosure described above may be implemented as computer-readable codes on a program-recorded medium. The computer readable medium includes all types of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may include the controller 1800 of the mobile robot.

**Claims**

1. A mobile robot (100), comprising:

a drive unit (1300) configured to move a main body (10);
an input unit (1200) provided with a camera (1210) configured to receive image information;
an output unit (1500);
a communication unit (1100) configured to communicate with position information transmitters (50, 50M, 51, 52, 53, 54, 55) installed within an area, wherein the position information transmitters (50, 50M, 51, 52, 53, 54, 55) are configured to transmit signals to the mobile robot (100); and
a controller (1800) configured to calculate location determination-related data based on at least one of a first signal transmitted between the position information transmitters (50, 50M, 51, 52, 53, 54, 55) and a second signal transmitted between the main body (10) and the position information transmitters (50, 50M, 51, 52, 53, 54, 55) within the area,
wherein the controller (1800) is configured to sense the entry of a moving object into the area and to perform an operation corresponding to the sensing of the entry based on whether an amount of change in the calculated location determination-related data is out of a reference range,
**characterized in that** the location determination-related data comprises at least one of distance information, signal strength information, and signal direction and angle information, which are calculated based on the first signal and a response signal to the first signal and/or based on the second signal and a response signal to the second signal,
wherein the controller (1800) is configured to output a preset warning alarm through the output unit (1500) with an operation corresponding to the sensing of the entry and to control the drive unit (1300) to rotate or move the main body (10) toward the sensed position of the moving object with an operation corresponding to the sensing of the entry such that the sensed position of the moving object is within a field of view of the camera (1210),
wherein the mobile robot (100) is configured to perform a photographing operation to acquire image information on the moving object, and
wherein the image information is sent to one or more of a preset external terminal, an external server, and a security company when a preset condition is satisfied.

2. The mobile robot (100) of claim 1, wherein the controller (1800) is configured to determine that a moving object enters into the area based on whether a change in location determination-related data calculated from the first signal is out of a reference range, and an attribute of the first signal is changed from either one of a non-line of sight (NLOS) signal and a line of sight (LOS) signal to the other one.

3. The mobile robot (100) of claim 1, wherein the controller (1800) is configured to sense that a moving object enters into the area based on whether an attribute of the first signal is changed from either one of a non-line of sight (NLOS) signal and a line of sight (LOS) signal to the other one, and

whether the attribute of the first signal is a non-line of sight (NLOS) signal or a line of sight (LOS) signal is determined by acquiring a channel impulse response (CIR) to the first signal.

4. The mobile robot (100) of claim 1, wherein the controller (1800) is configured to sense the entry of a moving object into the area based on whether a change in location determination-related data calculated from the first signal is out of a reference range, and senses the movement of the moving object based on whether a change in location determination-related data calculated from the second signal after sensing the entry is out of a reference range.

5. The mobile robot (100) of claim 1, wherein the controller (1800) is configured to recognize the entry position of the moving object based on position information of a position information transmitter (50, 50M, 51, 52, 53, 54, 55) that transmits a signal in which a change in the location determination-related data is out of a reference range.

6. The mobile robot (100) of claim 1, wherein the controller (1800) is configured to recognize a current position of the main body (10) based on a signal from the position information transmitter (50, 50M, 51, 52, 53, 54, 55), and detects the position of the moving object based on distance information between the current position of the main body (10) and the position information transmitter (50, 50M, 51, 52, 53, 54, 55) that transmits a signal in which a change of the calculated location determination-related data is out of a reference range when the entry of the moving object is sensed.

7. The mobile robot (100) of claim 1, wherein the controller (1800) is configured to transmit the sensed position information of the moving object and path information corresponding to a change of the position information with the operation corresponding to the sensing of the entry.

8. The mobile robot (100) of claim 1, wherein in case where a UWB antenna (230) is mounted on the moving object, the controller (1800) is configured to communicate with the UWB antenna (230) and the position information transmitter (50, 50M, 51, 52, 53, 54, 55) to recognize the position of the moving object, and to control the drive unit (1300) to move the main body (10) based on the position of the moving object.

9. The mobile robot (100) of claim 1, wherein in case where a UWB antenna (230) is mounted on the moving object, the controller (1800) is configured to adjust a driving speed of the main body (10) or to change a preset driving path when sensing that the moving object approaches the main body (10) based on a signal transmitted from the UWB antenna (230).

10. The mobile robot (100) of claim 1, wherein the controller (1800) is configured to set a virtual boundary for the area based on position information calculated based on a signal of the position information transmitter (50, 50M, 51, 52, 53, 54, 55), and to control the drive unit (1300) to move the main body (10) so as not to deviate from the set boundary.

11. A method of controlling a mobile robot (100), the method comprising:

communicating (S10) with a plurality of position information transmitters (50, 50M, 51, 52, 53, 54, 55) installed in an area, wherein the position information transmitters (50, 50M, 51, 52, 53, 54, 55) are configured to transmit signals to the mobile robot (100);
calculating (S20) location determination-related data based on at least one of a first signal transmitted between the position information transmitters (50, 50M, 51, 52, 53, 54, 55) and a second signal transmitted between the mobile robot (100) and the position information transmitters (50, 50M, 51, 52, 53, 54, 55) within the area;
sensing (S30) the entry of a moving object into the area based on whether an amount of change in the calculated location determination-related data is out of a reference range; and
performing (S40) an operation corresponding to the sensing of the entry,
**characterized in that** the location determination-related data comprises at least one of distance information, signal strength information, and signal direction and angle information, which are calculated based on the first signal and a response signal to the first signal and/or based on the second signal and a response signal to the second signal,
wherein performing (S40) an operation corresponding to the sensing of the entry comprises:

outputting a preset warning alarm through an output unit (1500) of the mobile robot (100),
rotating or moving a main body (10) of the mobile robot (100) such that a sensed position of the moving object is within a field of view of a camera (1210) of the mobile robot (100), and
performing a photographing operation to acquire image information on the moving object, wherein the image information is sent to one or more of a preset external terminal, an external server, and a security company when a preset condition is satisfied.

12. The method of claim 11, wherein said sensing the entry of a moving object into the area comprises:

   sensing (S010) the entry of the moving object in the area based on whether a change in the location determination-related data calculated from the first signal is out of a reference range; and
   sensing the movement of the moving object based on whether a change in the location determination-related data calculated from the second signal after sensing the entry is out of a reference range.

13. The method of claim 11, wherein said performing an operation corresponding to the sensing of the entry comprises:

   determining (S0120) an entry position of the moving object based on position information between position information transmitters (50, 50M, 51, 52, 53, 54, 55) that have transmitted signals, in which the calculated location determination-related data is out of a reference range;
   monitoring (S0130) a change in location determination-related data calculated from the first signal and the second signal to detect a current position of the moving object;
   driving (S0140) the main body (10) by avoiding the detected current position of the moving object; and
   transmitting (S0150) the sensed position information of the moving object and path information corresponding to a change of the position information to an external terminal.


**Patentansprüche**

1. Beweglicher Roboter (100), der Folgendes umfasst:

   eine Antriebseinheit (1300), die konfiguriert ist, einen Hauptkörper (10) zu bewegen;
   eine Eingabeeinheit (1200), die mit einer Kamera (1210) versehen ist, die konfiguriert ist, Bildinformationen zu erhalten;
   eine Ausgabeeinheit (1500);
   eine Kommunikationseinheit (1100), die konfiguriert ist, mit Positionsinformationssendern (50, 50M, 51, 52, 53, 54, 55), die in einem Bereich installiert sind, zu kommunizieren, wobei die Positionsinformationssender (50, 50M, 51, 52, 53, 54, 55) konfiguriert sind, Signale an den beweglichen Roboter (100) zu senden; und
   eine Steuereinheit (1800), die konfiguriert ist, Positionsbestimmungsdaten basierend auf einem ersten Signal, das zwischen den Positionsinformationssendern (50, 50M, 51, 52, 53, 54, 55) gesendet wird, und/oder einem zweiten Signal, das zwischen dem Hauptkörper (10) und den Positionsinformationssendern (50, 50M, 51, 52, 53, 54, 55) gesendet wird, in dem Bereich zu berechnen,
wobei die Steuereinheit (1800) konfiguriert ist, das Eintreten eines sich bewegenden Objekts in den Bereich zu erfassen und einen Betrieb entsprechend der Erfassung des Eintretens basierend darauf auszuführen, ob ein Änderungsbetrag bei den berechneten Positionsbestimmungsdaten außerhalb eines Referenzbereichs liegt,
**dadurch gekennzeichnet, dass** die Positionsbestimmungsdaten Abstandsinformationen, Signalstärke-Informationen und/oder Informationen bezüglich einer Signalrichtung und eines Signalwinkels umfassen, die basierend auf dem ersten Signal und einem Antwortsignal auf das erste Signal und/oder basierend auf dem zweiten Signal und einem Antwortsignal auf das zweite Signal berechnet werden,
wobei die Steuereinheit (1800) konfiguriert ist, in einem Betrieb, der der Erfassung des Eintretens entspricht, einen zuvor eingestellten Warnalarm durch die Ausgabeeinheit (1500) auszugeben und die Antriebseinheit (1300) in einem Betrieb, der der Erfassung des Eintretens entspricht, zu steuern, den Hauptkörper (10) zu der erfassten Position des sich bewegenden Objekts zu drehen oder zu bewegen, so dass die erfasste Position des sich bewegenden Objekts innerhalb eines Sichtfelds der Kamera (1210) liegt,
wobei der bewegliche Roboter (100) konfiguriert ist, einen Fotografierbetrieb auszuführen, um Bildinformationen bezüglich des sich bewegenden Objekts zu erfassen, und
wobei die Bildinformationen an ein zuvor eingestelltes externes Endgerät, einen externen Server und/oder eine Sicherheitsfirma gesendet werden, wenn eine zuvor eingestellte Bedingung erfüllt ist.

2. Beweglicher Roboter (100) nach Anspruch 1, wobei die Steuereinheit (1800) konfiguriert ist, basierend darauf, ob eine Änderung bei den Positionsbestimmungsdaten, die aus dem ersten Signal berechnet werden, außerhalb eines Referenzbereichs liegt, und ob ein Attribut des ersten Signals aus einem Nicht-Sichtverbindungssignal (NLOS) und einem Sichtverbindungssignal (LOS) in das jeweils andere geändert wird, festzustellen, dass ein sich bewegendes Objekt in den Bereich eintritt.

3. Beweglicher Roboter (100) nach Anspruch 1, wobei die Steuereinheit (1800) konfiguriert ist, basierend darauf, ob ein Attribut des ersten Signals aus einem Nicht-Sichtverbindungssignal (NLOS) und einem Sichtverbindungssignal (LOS) in das jeweils andere geändert wird, zu erfassen, dass ein sich bewegendes Objekt in den Bereich eintritt, und wobei die Tatsache, ob das Attribut des ersten Signals ein Nicht-Sichtverbindungssignal (NLOS) oder ein Sichtverbindungssignal (LOS) ist, ermittelt wird, indem eine Kanalimpulsantwort (CIR) auf das erste Signal erfasst wird.

4. Beweglicher Roboter (100) nach Anspruch 1, wobei die Steuereinheit (1800) konfiguriert ist, das Eintreten eines sich bewegenden Objekts in den Bereich basierend darauf zu erfassen, ob eine Änderung bei den Positionsbestimmungsdaten, die aus dem ersten Signal berechnet werden, außerhalb eines Referenzbereichs liegt, und die Bewegung des sich bewegenden Objekts basierend darauf erfasst, ob eine Änderung bei den Positionsbestimmungsdaten, die aus dem zweiten Signal berechnet werden, nachdem das Eintreten erfasst worden ist, außerhalb eines Referenzbereichs liegt.

5. Beweglicher Roboter (100) nach Anspruch 1, wobei die Steuereinheit (1800) konfiguriert es, die Eintrittsposition des sich bewegenden Objekts basierend auf Positionsinformationen eines Positionsinformationssenders (50, 50M, 51, 52, 53, 54, 55) zu erkennen, der ein Signal sendet, bei dem eine Änderung bei den Positionsbestimmungsdaten außerhalb eines Referenzbereichs liegt.

6. Beweglicher Roboter (100) nach Anspruch 1, wobei die Steuereinheit (1800) konfiguriert ist, eine aktuelle Position des Hauptkörpers (10) basierend auf einem Signal vom Positionsinformationssender (50, 50M, 51, 52, 53, 54, 55) zu erkennen, und die Position des sich bewegenden Objekts basierend auf Abstandsinformationen zwischen der aktuellen Position des Hauptkörpers (10) und dem Positionsinformationssender (50, 50M, 51, 52, 53, 54, 55), der ein Signal sendet, detektiert, wobei eine Änderung bei den berechneten Positionsbestimmungsdaten außerhalb eines Referenzbereichs liegt, wenn das Eintreten des sich bewegenden Objekts erfasst wird.

7. Beweglicher Roboter (100) nach Anspruch 1, wobei die Steuereinheit (1800) konfiguriert es, die erfassten Positionsinformationen des sich bewegenden Objekts und Pfadinformationen entsprechend einer Änderung bei den Positionsinformationen bei dem Betrieb entsprechend der Erfassung des Eintretens zu senden.

8. Beweglicher Roboter (100) nach Anspruch 1, wobei in dem Fall, wenn eine UWB-Antenne (230) am sich bewegenden Objekt montiert ist, die Steuereinheit (1800) konfiguriert ist, mit der UWB-Antenne (230) und dem Positionsinformationssender (50, 50M, 51, 52, 53, 54, 55) zu kommunizieren, um die Position des sich bewegenden Objekts zu erkennen, und die Antriebseinheit (1300) zu steuern, den Hauptkörper (10) basierend auf der Position des sich bewegenden Objekts zu bewegen.

9. Beweglicher Roboter (100) nach Anspruch 1, wobei in dem Fall, wenn eine UWB-Antenne (230) am sich bewegenden Objekt montiert ist, die Steuereinheit (1800) konfiguriert ist, eine Fahrgeschwindigkeit des Hauptkörpers (10) anzupassen oder einen zuvor eingestellten Fahrweg zu ändern, wenn basierend auf einem Signal, das von der UWB-Antenne (230) gesendet wird, erfasst wird, dass sich das sich bewegende Objekt dem Hauptkörper (10) nähert.

10. Beweglicher Roboter (100) nach Anspruch 1, wobei die Steuereinheit (1800) konfiguriert ist, eine virtuelle Grenze für den Bereich basierend auf Positionsinformationen einzustellen, die basierend auf einem Signal des Positionsinformationssenders (50, 50M, 51, 52, 53, 54, 55) berechnet werden, und die Antriebseinheit (1300) zu steuern, den Hauptkörper (10) so zu bewegen, dass er nicht von der eingestellten Grenze abweicht.

11. Verfahren zum Steuern eines beweglichen Roboters (100), wobei das Verfahren die folgenden Schritte umfasst:

Kommunizieren (S10) mit mehreren Positionsinformationssendern (50, 50M, 51, 52, 53, 54, 55), die in einem Bereich installiert sind, wobei die Positionsinformationssender (50, 50M, 51, 52, 53, 54, 55) konfiguriert sind, Signale an den beweglichen Roboter (100) zu senden;
Berechnen (S20) von Positionsbestimmungsdaten in dem Bereich basierend auf einem ersten Signal, das zwischen den Positionsinformationssendern (50, 50M, 51, 52, 53, 54, 55) gesendet wird, und einem zweiten Signal, das zwischen dem beweglichen Roboter (100) und den Positionsinformationssendern (50, 50M, 51, 52, 53, 54, 55) gesendet wird,
Erfassen (S30) des Eintretens eines sich bewegenden Objekts in den Bereich basierend darauf, ob ein Änderungsbetrag bei den berechneten Positionsbestimmungsdaten außerhalb eines Referenzbereichs liegt; und
Ausführen (S40) eines Betriebs entsprechend der Erfassung des Eintretens, **dadurch gekennzeichnet, dass** die Positionsbestimmungsdaten Abstandsinformationen, Signalstärke-Informationen und/oder Informationen bezüglich einer Signalrichtung und eines Signalwinkels umfassen, die basierend auf dem ersten Signal und einem Antwortsignal auf das erste Signal und/oder basierend auf dem zweiten Signal und einem Antwortsignal auf das zweite Signal berechnet werden,

wobei das Ausführen (S40) eines Betriebs entsprechend der Erfassung des Eintretens die folgenden Schritte umfasst:

Ausgeben eines zuvor eigestellten Warmalarms durch eine Ausgabeeinheit (1500) des beweglichen Roboters (100),
Drehen oder Bewegen eines Hauptkörpers (10) des beweglichen Roboters (100), so dass eine erfasste Position des sich bewegenden Objekts innerhalb eines Sichtfelds einer Kamera (1210) des beweglichen Roboters (100) liegt, und
Ausführen eines Fotografierbetriebs, um Bildinformationen des sich bewegenden Objekts zu erfassen, wobei die Bildinformationen an ein zuvor eingestelltes externes Endgerät, einen externen Server und/oder eine Sicherheitsfirma gesendet werden, wenn eine zuvor eingestellte Bedingung erfüllt ist.

**12.** Verfahren nach Anspruch 11, wobei das Erfassen des Eintretens eines sich bewegenden Objekts in den Bereich die folgenden Schritte umfasst:

Erfassen (S010) des Eintretens des sich bewegenden Objekts in den Bereich basierend darauf, ob eine Änderung bei den Positionsbestimmungsdaten, die aus dem ersten Signal berechnet werden, außerhalb eines Referenzbereichs liegt; und
Erfassen der Bewegung des sich bewegenden Objekts basierend darauf, ob eine Änderung bei den Positionsbestimmungsdaten, die aus dem zweiten Signal berechnet werden, nachdem das Eintreten erfasst worden ist, außerhalb eines Referenzbereichs liegt.

**13.** Verfahren nach Anspruch 11, wobei das Ausführen eines Betriebs entsprechend der Erfassung des Eintretens die folgenden Schritte umfasst:

Ermitteln (S0120) einer Eintrittsposition des sich bewegenden Objekts basierend auf Positionsinformationen zwischen Positionsinformationssendern (50, 50M, 51, 52, 53, 54, 55), die Signale gesendet haben, wobei die berechneten Positionsbestimmungsdaten außerhalb eines Referenzbereichs liegen;
Überwachen (S0130) einer Änderung bei den Positionsbestimmungsdaten, die aus dem ersten Signal und dem zweiten Signal berechnet werden, um eine aktuelle Position des sich bewegenden Objekts zu detektieren;
Fahren (S0140) des Hauptkörpers (10), wobei die detektierte aktuelle Position des sich bewegenden Objekts vermieden wird; und
Senden (S0150) der erfassten Positionsinformationen des sich bewegenden Objekts und der Pfadinformationen entsprechend einer Änderung bei den Positionsinformationen an ein externes Endgerät.

## Revendications

**1.** Robot mobile (100), comportant :

une unité d'entraînement (1300) configurée pour déplacer un corps principal (10) ;
une unité d'entrée (1200) pourvue d'une caméra (1210) configurée pour recevoir des informations d'image ;
une unité de sortie (1500) ;
une unité de communication (1100) configurée pour communiquer avec des émetteurs d'informations de position (50, 50M, 51, 52, 53, 54, 55) installés à l'intérieur d'une zone, dans lequel les émetteurs d'informations de position (50, 50M, 51, 52, 53, 54, 55) sont configurés pour transmettre des signaux au robot mobile (100) ; et
une commande (1800) configurée pour calculer des données associées à une détermination d'emplacement sur la base d'au moins un signal parmi un premier signal transmis entre les émetteurs d'informations de position (50, 50M, 51, 52, 53, 54, 55) et un second signal transmis entre le corps principal (10) et les émetteurs d'informations de position (50, 50M, 51, 52, 53, 54, 55) à l'intérieur de la zone,
dans lequel la commande (1800) est configurée pour détecter l'entrée d'un objet en mouvement dans la zone et pour exécuter une opération correspondant à la détection de l'entrée sur la base de si une quantité de changement des données associées à la détermination d'emplacement calculées sont en dehors d'une plage de référence,
**caractérisé en ce que** les données associées à la détermination d'emplacement comportent au moins un élément parmi des informations de distance, des informations de force de signal et des informations de direction et d'angle de signal, qui sont calculées sur la base du premier signal et d'un signal de réponse au premier signal et/ou sur la base du second signal et d'un signal de réponse au second signal,
dans lequel la commande (1800) est configurée pour générer une alarme d'avertissement préréglée via l'unité de sortie (1500) avec une opération correspondant à la détection de l'entrée et pour commander à l'unité d'entraînement (1300) de faire tourner ou de déplacer le corps principal (10) vers la position détectée de l'objet en mouvement avec une opération correspondant à la détection de l'entrée de telle sorte que la position détectée de l'objet en mouvement est dans un champ de vision de la caméra (1210), dans lequel le robot mobile (100) est configuré pour exécuter une opération de photographie pour acquérir des informations d'image concernant l'objet en mouvement, et dans lequel les informations d'image sont envoyées à un ou plusieurs éléments parmi un terminal externe prédéfini, un serveur externe et une société de sécurité lorsqu'une condition prédéfinie est satisfaite.

2. Robot mobile (100) selon la revendication 1, dans lequel la commande (1800) est configurée pour déterminer qu'un objet en mouvement entre dans la zone sur la base de si un changement de données associées à une détermination d'emplacement calculées à partir du premier signal est en dehors d'une plage de référence, et si un attribut du premier signal est passé d'un signal parmi un signal de visibilité indirecte (NLOS) et un signal de visibilité directe (LOS) à l'autre signal.

3. Robot mobile (100) selon la revendication 1, dans lequel la commande (1800) est configurée pour détecter qu'un objet en mouvement entre dans la zone sur la base de si un attribut du premier signal est passé d'un signal parmi un signal de visibilité indirecte (NLOS) et un signal de visibilité directe (LOS) à l'autre signal, et

dans lequel l'attribut du premier signal est un signal de visibilité indirecte (NLOS) ou un signal de visibilité directe (LOS) est déterminé par l'acquisition d'une réponse impulsionnelle de canal (CIR) au premier signal.

4. Robot mobile (100) selon la revendication 1, dans lequel la commande (1800) est configurée pour détecter l'entrée d'un objet en mouvement dans la zone sur la base de si un changement de données associées à une détermination d'emplacement calculées à partir du premier signal est en dehors d'une plage de référence, et détecte le mouvement de l'objet en mouvement sur la base de si un changement de données associées à une détermination d'emplacement calculées à partir du second signal après la détection de l'entrée est en dehors d'une plage de référence.

5. Robot mobile (100) selon la revendication 1, dans laquelle la commande (1800) est configurée pour reconnaître la position d'entrée de l'objet en mouvement sur la base d'informations de position d'un émetteur d'informations de position (50, 50M, 51, 52, 53, 54, 55) qui transmet un signal dans lequel un changement des données associées à une détermination d'emplacement sont en dehors d'une plage de référence.

6. Robot mobile (100) selon la revendication 1, dans lequel la commande (1800) est configurée pour reconnaître une position actuelle du corps principal (10) sur la base d'un signal provenant de l'émetteur d'informations de position (50, 50M, 51, 52, 53, 54, 55), et détecte la position de l'objet en mouvement sur la base d'informations de distance entre la position actuelle du corps principal (10) et de l'émetteur d'informations de position (50, 50M, 51, 52, 53, 54, 55) qui transmet un signal dans lequel un changement des données associées à une détermination d'emplacements calculées sont en dehors d'une plage de référence lorsque l'entrée de l'objet en mouvement est détectée.

7. Robot mobile (100) selon la revendication 1, dans lequel la commande (1800) est configurée pour transmettre les informations de position détectées de l'objet en mouvement et des informations de trajet correspondant à un changement des informations de position avec l'opération correspondant à la détection de l'entrée.

8. Robot mobile (100) selon la revendication 1, dans lequel dans un cas où une antenne UWB (230) est montée sur l'objet en mouvement, la commande (1800) est configurée pour communiquer avec l'antenne UWB (230) et l'émetteur d'informations de position (50, 50M, 51, 52, 53, 54, 55) pour reconnaître la position de l'objet en mouvement, et pour commander à l'unité d'entraînement (1300) de déplacer le corps principal (10) sur la base de la position de l'objet en mouvement.

9. Robot mobile (100) selon la revendication 1, dans lequel dans un cas où une antenne UWB (230) est montée sur l'objet en mouvement, la commande (1800) est configurée pour régler une vitesse d'entraînement du corps principal (10) ou pour changer un trajet d'entraînement prédéfini lorsqu'il est détecté que l'objet en mouvement s'approche du corps principal (10) sur la base d'un signal transmis à partir de l'antenne UWB (230).

10. Robot mobile (100) selon la revendication 1, dans lequel la commande (1800) est configurée pour définir une frontière virtuelle pour la zone sur la base d'informations de position calculées sur la base d'un signal de l'émetteur d'informations de position (50, 50M, 51, 52, 53, 54, 55), et pour commander à l'unité d'entraînement (1300) de déplacer le corps principal (10) de manière à ne pas s'écarter de la frontière définie.

**11.** Procédé de commande d'un robot mobile (100), le procédé comportant les étapes consistant à :

communiquer (S 10) avec une pluralité d'émetteurs d'informations de position (50, 50M, 51, 52, 53, 54, 55) installés dans une zone, dans lequel les émetteurs d'informations de position (50, 50M, 51, 52, 53, 54, 55) sont configurés pour transmettre des signaux au robot mobile (100) ;
calculer (S20) des données associées à une détermination d'emplacement sur la base d'au moins un signal parmi un premier signal transmis entre les émetteurs d'informations de position (50, 50M, 51, 52, 53, 54, 55) et un second signal transmis entre le robot mobile (100) et les émetteurs d'informations de position (50, 50M, 51, 52, 53, 54, 55) à l'intérieur de la zone ;
détecter (S30) l'entrée d'un objet en mouvement dans la zone sur la base de si une quantité de changement des données associées à la détermination d'emplacement calculées sont en dehors d'une plage de référence ; et
exécuter (S40) une opération correspondant à la détection de l'entrée,
**caractérisé en ce que** les données associées à la détermination d'emplacement comportent au moins un élément parmi des informations de distance, des informations de force de signal et des informations de direction et d'angle de signal, qui sont calculées sur la base du premier signal et d'un signal de réponse au premier signal et/ou sur la base du second signal et d'un signal de réponse au second signal,
dans lequel l'exécution (S40) d'une opération correspondant à la détection de l'entrée comporte de :

générer une alarme d'avertissement préréglée via une unité de sortie (1500) du robot mobile (100),
faire tourner ou déplacer un corps principal (10) du robot mobile (100) de telle sorte qu'une position détectée de l'objet en mouvement est dans les limites d'un champ de vision d'une caméra (1210) du robot mobile (100), et
exécuter une opération de photographie pour acquérir des informations d'image concernant l'objet en mouvement, dans lequel les informations d'image sont envoyées à un ou plusieurs éléments parmi un terminal externe prédéfini, un serveur externe et une société de sécurité lorsqu'une condition prédéfinie est satisfaite.

**12.** Procédé selon la revendication 11, dans lequel ladite détection de l'entrée d'un objet en mouvement dans la zone comporte les étapes consistant à :

détecter (S010) l'entrée de l'objet en mouvement dans la zone sur la base de si un changement dans les données associées à la détermination d'emplacement calculées à partir du premier signal sont en dehors d'une plage de référence ; et
détecter le mouvement de l'objet en mouvement sur la base de si un changement des données associées à la détermination d'emplacement calculées à partir du second signal après la détection de l'entrée sont en dehors d'une plage de référence.

**13.** Procédé selon la revendication 11, dans lequel ladite exécution d'une opération correspondant à la détection de l'entrée comporte les étapes consistant à :

déterminer (S0120) une position d'entrée de l'objet en mouvement sur la base d'informations de position entre des émetteurs d'informations de position (50, 50M, 51, 52, 53, 54, 55) qui ont transmis des signaux, dans lequel les données associées à une détermination d'emplacement calculées sont en dehors d'une plage de référence ;
surveiller (S0130) un changement des données associées à la détermination d'emplacement calculées à partir du premier signal et du second signal pour détecter une position actuelle de l'objet en mouvement ;
entraîner (S0140) le corps principal (10) en évitant la position actuelle détectée de l'objet en mouvement ; et
transmettre (S0150) les informations de position détectées de l'objet en mouvement et des informations de trajet correspondant à un changement des informations de position à un terminal externe.

# FIG. 1

# FIG. 2A

100

200

NETWORK

SERVER — 300

# FIG. 2B

POWER SUPPLY UNIT — 1900

1100 — COMMUNICATION UNIT

1200 — INPUT UNIT

1210 — CAMERA

1400 — SENSING UNIT

1401 — POSITION SENSING UNIT

1402 — OBSTACLE SENSING UNIT

CONTROLLER — 1800

DRIVE UNIT — 1300

OUTPUT UNIT — 1500

MEMORY — 1600

WEEDING UNIT — 1700

# FIG. 2C

200

| 230 | USB MODULE | | | DISPLAY MODULE | 251 |
|---|---|---|---|---|---|
| 260 | MEMORY | | CONTROLLER | SENSING UNIT | 240 |
| 220 | INPUT UNIT | | | COMMUNICATION UNIT | 210 |

280

# FIG. 3

200

100

POSITION INFORMATION

GPS — 60

POSITION INFORMATION TRANSMITTER — 50

# FIG. 4

# FIG. 5A

# FIG. 5B

# FIG. 5C

# FIG. 6

```
        ┌─────────────┐
        │    START    │
        └─────────────┘
               │
               ▼
┌──────────────────────────────────────────────────────┐
│  INSTALLED IN PLURAL IN AREA TO COMMUNICATE WITH POSITION │ ── S10
│  INFORMATION TRANSMITTERS THAT TRANSMIT SIGNALS        │
└──────────────────────────────────────────────────────┘
               │
               ▼
┌──────────────────────────────────────────────────────┐
│  CALCULATE LOCATION DETERMINATION-RELATED DATA BASED ON  │
│  AT LEAST ONE OF FIRST SIGNAL TRANSMITTED BETWEEN THE POSITION │ ── S20
│  INFORMATION TRANSMITTERS AND SECOND SIGNAL TRANSMITTED  │
│  BETWEEN MAIN BODY AND THE POSITION INFORMATION TRANSMITTERS │
└──────────────────────────────────────────────────────┘
               │
               ▼
┌──────────────────────────────────────────────────────┐
│  SENSE ENTRY OF MOVING OBJECT INTO BOUNDARY IN RESPONSE TO │
│  DETECTED AMOUNT OF CHANGE IN LOCATION DETERMINATION-RELATED │ ── S30
│  DATA BEING OUT OF REFERENCE RANGE                     │
└──────────────────────────────────────────────────────┘
               │
               ▼
┌──────────────────────────────────────────────────────┐
│  PERFORM OPERATION CORRESPONDING TO THE SENSING        │ ── S40
└──────────────────────────────────────────────────────┘
               │
               ▼
        ┌─────────────┐
        │     END     │
        └─────────────┘
```

# FIG. 7

## FIG. 8

## FIG. 9

# FIG. 10

START

SENSE ENTRY OF MOVING OBJECT INTO BOUNDARY IN RESPONSE TO AMOUNT OF CHANGE IN LOCATION DETERMINATION-RELATED DATA CALCULATED FROM FIRST SIGNAL TRANSMITTED BETWEEN POSITION INFORMATION TRANSMITTERS BEING OUT OF REFERENCE RANGE —— S1010

DETERMINE POSITION OF MOVING OBJECT THAT HAS ENTERED BASED ON POSITION INFORMATION OF POSITION INFORMATION TRANSMITTER THAT HAS TRANSMITTED SIGNAL IN WHICH AMOUNT OF CHANGE IN LOCATION DETERMINATION-RELATED DATA IS OUT OF REFERENCE RANGE —— S1020

MONITOR AMOUNT OF CHANGE IN LOCATION DETERMINATION-RELATED DATA CALCULATED FROM THE FIRST SIGNAL AND SECOND SIGNAL TO DETECT CURRENT POSITION OF MOVING OBJECT —— S1030

DRIVE MAIN BODY BY AVOIDING THE DETECTED CURRENT POSITION OF MOVING OBJECT —— S1040

TRANSMIT THE DETECTED POSITION INFORMATION OF MOVING OBJECT AND PATH INFORMATION CORRESPONDING TO CHANGE OF THE POSITION INFORMATION TO EXTERNAL TERMINAL —— S1050

END

# FIG. 11

WI-FI
COMMUNICATION

200
151
1101

AFTER SENSING ENTRY
OF MOVING OBJECT
INTO BOUNDARY

⚠ WARNING

INTRUSION HAS
OCCURRED

1110

(a)                                    (b)

**REFERENCES CITED IN THE DESCRIPTION**

**Patent documents cited in the description**

- US 2017026818 A1
- US 2018364350 A1
- KR 20150125508
- US 20170026818 A